# EUROPÄISCHE PATENTSCHRIFT

(11) **EP 2 203 393 B1**
(45) Veröffentlichungstag und Bekanntmachung des Hinweises auf die Patenterteilung: **29.05.2013**
(21) Anmeldenummer: 08801335.4
(22) Anmeldetag: 16.09.2008
(51) Int. Cl.: C03B 33/10

(54) **Schneidrädchen, schneidmaschine mit dem Schneidrädchen und dazu gehörendem Verfahren.**
Cutting wheel, cutting machine with said cutting wheel and associated process.
Roulette de coupe, machine de coupe comprenant cette roulette et procédé associé.

(30) Priorität: 22.09.2007 DE 202007013307 U
(43) Veröffentlichungstag der Anmeldung: 07.07.2010
(73) Patentinhaber: Bohle AG, 42781 Haan (DE)
(72) Erfinder: OSTENDARP, Heinrich, 42781 Haan (DE); STREHLOW, Lutz, 42699 Solingen (DE); PIONTEK, Siegfried, 42349 Wuppertal (DE)
(74) Vertreter: Lippert, Stachow & Partner
(86) Internationale Anmeldenummer: PCT/DE2008/001543
(87) Internationale Veröffentlichungsnummer: WO 2009/036742

(56) Entgegenhaltungen:
- EP-A- 0 773 194
- WO-A-2004/101455
- WO-A-2008/087612
- US-A1- 2006 118 097

## Beschreibung

Die Erfindung betrifft ein Glasschneidrädchen zum Erzeugen einer geritzten Sollbruchlinie auf einem Glaskörper, wobei das Schneidrädchen eine einen Außenumfang des Rädchens definierende radiale Umfangslinie aufweist, die in einer Hauptebene des Rädchens liegt und zumindest teilweise eine Schneidkante ausbildet, wobei beidseitig der Hauptebene angeordnete geneigte Seitenflächen des Rädchens vorgesehen sind, die zur Hauptebene hin konvergieren, wobei die Schneidkante Schneidzähne aufweist, die in Umfangsrichtung durch Zahnzwischenräume voneinander beabstandet angeordnet sind und deren Höhe und/oder Umfangserstreckung über eine etwaige regellose Oberflächenrauhigkeit hinausgehen, und wobei zumindest ein Teil oder sämtliche der Zahnzwischenräume eine Schneidkante aufweisen,. Weiterhin betrifft die Erfindung eine Schneidemaschine gemäß dem Oberbegriff des unabhängigen Anspruchs 10 und einen Handglasschneider nach Anspruch 12, sowie ein Verfahren zur Herstellung von Glaskörpern nach dem Oberbegriff des Anspruchs 14.

Glasschneidrädchen sind vielfältig bekannt, die zum Ritzen von zum Teil sehr unterschiedlichen Glaskörpern wie z.B. Glasplatten, Hohlkörpern usw. eingesetzt werden. Die Glaskörper können sich hinsichtlich der jeweiligen Glasart, insbesondere der chemischen Zusammensetzung derselben, der Materialstärke usw. unterscheiden. Weiterhin bestehen erhebliche Anforderungen an die Qualität der durch die geritzte Sollbruchlinie erzeugten Glastrennflächen. Dies kann in gewissen grenzen durch die verwendeten Schneidrädchen gesteuert werden, da die Kanten des Glaskörpers entlang der Sollbruchlinie in Abhängigkeit von dem verwendeten Rädchen mehr oder weniger stark absplittern. Es versteht sich, dass insbesondere im Hinblick auf sehr dünne Glasplatten, wie sie beispielsweise für Displays oder andere elektronische Geräte oder Anwendungen eingesetzt werden, besonders hohe qualitative Anforderungen an die stirnseitige Trennfläche der Glasplatte zu stellen sind. Hierbei ist es zumeist erforderlich, durch den Ritzvorgang einen Tiefenriss zu erzeugen, der sich vorzugsweise über die gesamte Stärke der Glasplatte erstreckt, so dass Ausschuss bei der Separierung der einzelnen Glasplattenstücke weitestgehend vermieden werden kann. Andererseits ist es von wesentlicher Bedeutung, eine optimale Kantenqualität zu erzielen. So werden aufgrund des Ritzvorganges Materialspannungen in die Glasplatte eingebracht, welche zu einem oberflächlichen Absplittern entlang der Ritzlinie führen. Dies ist jedoch ebenfalls unerwünscht und kann zu erhöhtem Ausschuss führen. Zwar können derartige Absplitterungen dadurch vermindert werden, dass die Glasschneidrädchen mit geringerer Kraft gegen die Glasplatte angedrückt werden, dies führt dann jedoch zu einer geringeren Tiefe des Risses, wodurch das Separieren der Glasplattenteile erschwert oder der Ausschuss wesentlich erhöht ist.

Zum Separieren von Glasplattenteilen für Flachdisplays wurden daher teilweise Laserstrahlschneidtechniken eingesetzt, die jedoch einen hohen apparativen Aufwand bedingen. Zudem ist die Produktivität derartiger Laserstrahlschneidverfahren begrenzt.

Andererseits sind Glasschneidrädchen bekannt, die sehr tiefe Risse erzeugen können und somit zur Herstellung von Flachdisplays wie z.B. für Flachbildschirme prinzipiell geeignet sind. So werden in der EP 773 194 B1 Schneidrädchen beschrieben, bei welchen die durch die zusammenlaufenden geneigten Seitenflächen des Rädchens gebildete Rippe alternierend Vorsprünge und Vertiefungen aufweist, wobei sich die Vertiefungen radial einwärts der äußersten Umfangslinie des Rädchens erstrecken und die Vertiefungen lediglich durch ein Formen der Rippe ausgebildet sind. Diese Vertiefungen der Rippe, die als sich senkrecht zu der Hauptmittelebene der Rädchen erstreckende Nuten ausgeführt sind, können U- oder V-förmig ausgebildet sein. Die Vorsprünge können bezogen auf deren Längserstreckung verschiedene Formen aufweisen. Nachteilig bei diesen Schneidrädchen ist jedoch, dass die durch diese erzeugten Risse der Glasplatte zu Bruchkanten mit einer für heutige Anwendungsfälle nicht immer optimalen Kantenqualität führen. Demgegenüber können mittels ansonsten üblicher Standardrädchen, bei welchen die zur Schneidkante hin konvergierenden Seitenflächen des Rädchens unter Aufrauung der Oberfläche angeschliffen sind, teilweise Bruchkanten noch ausreichender Qualität erzeugt werden, die tiefere Risse als mit konventionellen Schneidrädchen sonst üblich erzeugen. Diese Risse erstrecken sich dennoch nicht über die gesamte Glasdicke. Die dem Ritz abseitige Bruchkante ist dann hierdurch ebenfalls bei der Herstellung von Flachdisplays von minderer Qualität.

Die US 2006/0118097A1 beschreibt ein Glasschneidrädchen, bei welchem mittels eines Bindemittels Diamantsplitter in einer Schicht an den geneigten Seitenflächen des Rädchenkorpus angehaftet sind.

Der Erfindung liegt somit die Aufgabe zugrunde, Glasschneidrädchen zu schaffen, mittels welcher insbesondere Flachdisplays mit verbesserter Kantenqualität geschaffen werden können, wobei der bei der Flachdisplayherstellung aufgrund der notwendigen Separation der Glasplattenteile erzielte Ausschuss verringert werden kann.

Die Aufgabe der Erfindung wird durch ein Glasschneidrädchen nach Anspruch 1 gelöst, sowie durch die Gegenstände und ein Verfahren nach den weiteren unabhängigen Ansprüchen. Zumindest ein Teil oder vorzugsweise sämtliche der Zahnzwischenräume, die zwischen den über eine etwaige regellose Oberflächenrauhigkeit in der Höhe und/oder in der Umfangserstreckung hinausgehenden Zähnen vorgesehen sind, weisen eine Schneidkante auf , wobei die Schneidkanten der Zahnzwischenräume und die Schneidkanten der Zähne in derselben Hauptebene des Rädchens liegen oder sämtliche der Schneidkanten der Zähne und der Zahnzwischenräume in einem lateralen Abstand von ≤ 5 µm von der die Umfangslinie des Rädchens umfassenden Hauptmittelebene liegen, wobei das Schneidrädchen die weiteren Merkmale des Anspruchs 1 aufweist.

Durch Ritzen mit derartigen Glasschneidrädchen ist es überraschenderweise möglich, Tiefenrisse vergleichsweise großer Tiefe zu erzeugen, die sich bis praktisch über die gesamte Stärke der Flachdisplayglasplatte erstrecken und diese praktisch vollständig durchtrennen, wobei die Bruchkanten, insbesondere die durch Ritzen mittels des Schneidrädchens erzeugte, eine auch für heutige Anforderungen praktisch optimale Qualität aufweisen. Absplitterungen an der Bruchkante zum Glasplatteninneren hin können beinahe vollständig vermieden werden. Die Glasplatten können hierbei ohne weiteres eine Stärke von ca. 0,2 mm bis 2 mm aufweisen, vorzugsweise eine Stärke von 0,3 mm bis 1,1 mm. Derartige Glasplatten können insbesondere auch zur Herstellung von Flachdisplays für Flachbildschirme, Mobiltelefone, Digitalkameras oder andere elektronische Geräte oder Anwendungen eingesetzt werden. Mittels der erfindungsgemäßen Glasschneidrädchen sind derartige Flachdisplays mit praktisch vernachlässigbarem Ausschuss und hervorragender Kantenqualität praktisch ohne seitliche Absplitterungen herstellbar. Entsprechendes gilt auch für eine Trennung von Glaskörpern in einem sogenannten "geöffneten Schnitt", bei welchem durch den Ritzvorgang bereits eine gewisse Separation der getrennten Teile des Körpers erfolgt.

Es wird hierbei davon ausgegangen, dass durch die Schneidwirkung des Glasschneidrädchens im Bereich der Zahnzwischenräume die Ausbildung von seitlichen Absplitterungen im Bereich der Glasplattenkante minimiert werden kann, wobei diese Wirkung anscheinend auch im Bereich der Schneidzähne zum tragen kommt, so dass insgesamt eine Bruchkante sehr hoher Qualität erzielt werden kann. Demgegenüber werden mit Rädchen nach der EP 773 194 A1 bei welchen die Zahnzwischenräume keine Schneidkanten aufweisen, nur relativ breite Ritzungen erzielt, die nicht zu der erforderlichen Kantenqualität führen.

Erfindungsgemäß ist die Form der Zähne so ausgebildet, dass deren Umfangslinie sehr exakt auf einer Hauptebene, insbesondere der Hauptmittelebene, des Rädchens liegt oder dass sämtliche der Schneidkanten der Zähne und der Zahnzwischenräume in einem lateralen Abstand von ≤ 4 bis 5 µm, vorzugsweise ≤ 2 bis 3 µm oder ≤ 1 µm von der die Umfangslinie des Rädchens umfassenden Hauptmittelebene liegen. Die Schneidkanten der Zahnzwischenräume können lateral beabstandet von den Seitenflächen des Rädchens und/oder den seitlichen Zahnflanken angeordnet und zur Hauptmittelebene des Rädchens hin versetzt sein. Bezogen auf die Zahnbreite sind die Schneidkanten der Zahnzwischenräume in dem mittleren Bereich derselben angeordnet.

Besonders bevorzugt sind die Schneidkanten der Zahnzwischenräume und die Schneidkanten der Zähne zumindest in etwa in derselben Hauptebene des Rädchens angeordnet, d.h. einer Ebene senkrecht zur Drehachse des Rädchens, vorzugsweise der Hauptmittelebene des Rädchens, die durch den Rädchenschwerpunkt verläuft.

Nach einer bevorzugten Ausführungsform laufen die geneigten Seitenflächen des Rädchens in einem Grat zusammen, wobei die Schneidzähne auf dem Grat aufgesetzt sind, der als Schneidkante im Bereich der Zahnzwischenräume ausgebildet ist, wodurch die Zähne besonders verschleißfest und langlebig sind. Die Schneidzähne können hierbei eine dachartige Form aufweisen, wobei die Zahnoberseiten von den benachbarten Bereichen der geneigten Seitenflächen des Rädchens radial beabstandet sind. Die Zahnoberseiten können in einem Winkel von beispielsweise ≤ 30°, ≤ 20° oder ≤ 5-10° zu den Seitenflächen geneigt sein oder im Wesentlichen parallel mit diesen verlaufen. Die Seitenflächen der Zähne können mit den Seitenflächen des Rädchens einen Winkel einschließen. Die Zahnseitenflächen können hierbei zumindest im wesentlichen parallel zu der Hauptmittelebene des Rädchens verlaufen oder mit dieser einen Winkel einschließen, der spitzer ist als der Winkel der Hauptmittelebene mit den Seitenflächen des Rädchens.

Die Breite der Schneidzähne kann größer als die Umfangserstreckung derselben sein, was auch allgemein gelten kann. Die Schneidzähne können hierbei in einer in Umfangsrichtung verlaufenden Rinne angeordnet sein. Die Zahnoberflächen können mit den seitlich der Rinne angeordneten Bereichen des Rädchens fluchtend angeordnet sein. Insgesamt sind die Schneidrädchen hierdurch in besonders engen Dimensionstoleranzen herstellbar und können in ihrer Zahngeometrie für verschiedene Anwendungsfälle einfach angepasst werden.

Alternativ können die Zahnzwischenräume durch Vertiefungen in zumindest einer oder beiden Seitenflächen des Rädchens ausgebildet sein. Es versteht sich, dass gegebenenfalls auch an einem Glasschneidrädchen die Schneidzähne auf dem durch die zusammenlaufenden geneigten Seitenflächen des Rädchens gebildeten Grat aufgesetzt sind, wobei zugleich durch Vertiefungen einer oder beider Seitenflächen des Rädchens die Zahnzwischenräume in ihrer Form weiter ausgestaltet sein können.

Vorzugsweise sind die Zahnzwischenräume als taschenförmige Ausnehmungen der geneigten Seitenflächen des Rädchens ausgebildet. Die Ausnehmungen können sich in lateraler Richtung bis zu der Hauptmittelebene des Rädchens erstrecken oder lateral in einem Abstand von dieser enden. Besonders bevorzugt erstrecken sich die Zahnzwischenräume bzw. die taschenförmigen Ausnehmungen in lateraler Richtung derart weit über die geneigten Seitenflächen, dass die Endbereiche derselben bei dem Ritzvorgang außer Eingriff mit der Glasplatte sind. Ausgehend von der Hauptmittelebene des Rädchen können die Zahnzwischenräume bzw. Ausnehmungen eine laterale Erstreckung von ≥ 10-15 µm oder ≥ 20-25 µm oder vorzugsweise ≥ 30-50 µm betragen. Die Weite der Ausnehmungen im Bereich der Hauptmittelebene und/oder an deren der Hauptmittelebene abgewandtem Endbereich, d.h. die Erstreckung der Ausnehmungen in Umfangsrichtung des Rädchens, kann ≥ 10-15 µm, ≥ 20-25 µm oder ≥ 30 µm betragen, die Weite kann auch ≤ 30-40 µm oder ≤ 50-75 µm oder ≤ 100 µm betragen. Die taschenförmigen Ausnehmungen können einen zumindest im Wesentlichen ebenen Grund aufweisen. Der Grund kann parallel zu der Oberseite der angrenzenden Bereiche der geneigten Seitenflächen und/oder der benachbarten Zahnoberflächen verlaufen, so dass die taschenförmigen Ausnehmungen praktisch eine konstante Tiefe aufweisen können. Die Tiefe der Taschen kann allgemein der Zahnhöhe entsprechen. Der Grund kann auch in einem kleinen Winkel von beispielsweise ≤ 20-30° oder ≤ 10-15° oder ≤ 5° zu der Oberseite der Seitenflächen geneigt sein, wobei der Grund zur Hauptmittelebene des Rädchens jeweils ansteigen oder abfallen kann. Die Seitenwände der taschenförmigen Ausnehmungen können zumindest annähernd senkrecht zu dem Grund der Ausnehmungen und/oder der Oberfläche der angrenzenden Bereiche der geneigten Seitenflächen des Rädchens verlaufen, beispielsweise in einem Winkel von ≤ 20-30° oder ≤ 10-15° oder ≤ 3-5°.

Vorzugsweise ist der eingeschlossene Flankenwinkel der Zahnzwischenräume zumindest im Wesentlichen gleich dem eingeschlossenen Flankenwinkel der Zähne. Dies bezieht sich zumindest auf den Bereich der Zahnzwischenräume, in welchem das Rädchen in die Glasplatte eindringt, z.B. ausgehend von dem Zahnrücken über eine Tiefe von ≤ 5-10 µm oder 15-20 µm. Der eingeschlossene Flankenwinkel der Zahnzwischenräume sowie auch der Flankenwinkel der Zähne kann hierbei jeweils der Neigung der zusammenlaufenden Seitenflächen des Rädchens entsprechen. Gegebenenfalls kann der eingeschlossene Flankenwinkel der Zahnzwischenräume um ≤ ± 25° bis 30° oder ≤ ± 15° bis 20°, gegebenenfalls ≤ ± 5° bis 10° oder weniger von dem eingeschlossenen Flankenwinkel der Zähne abweichen, beispielsweise ≤ ±2° bis 3° oder ≤ ± 1°. Hierdurch können bei einfacher Herstellbarkeit der Schneidrädchen sehr gute Schneidergebnisse erzielt werden.

Gegebenenfalls kann für manche Anwendungsfälle der eingeschlossene Flankenwinkel der Zahnzwischenräume auch kleiner oder größer als der Flankenwinkel der Zähne sein, so dass die Flanken der Zahnzwischenräume steiler angestellt sind als die Zahnflanken und mit der Hauptebene des Rädchens einen kleineren Winkel einschließen. Eine derartige Ausgestaltung ist aufwändiger herzustellen, die Kantenausbildung der Glasplatten kann hierdurch unter Umständen jedoch weiter verbessert werden.

Die Flanken der Schneidzähne und/oder der Zahnzwischenräume können zumindest im Wesentlichen eben ausgeführt sein, wodurch die Herstellbarkeit der Rädchen vereinfacht und deren Lebensdauer erhöht wird. Die Flanken der Zahnzwischenräume können hierbei auch konvex ausgeführt sein oder eine andere Ausformung aufweisen, was auch allgemein gelten kann. Ferner können allgemein die Flanken der Schneidzähne zumindest im Wesentlichen eben, konkav oder konvex ausgeführt sein.

Die Schneidkanten der Zahnzwischenräume können um ≥ 0,5-1 µm oder ≥ 1,5-2 µm, beispielsweise ≥ 3-4 µm oder ≥ 5-10 µm von den Schneidkanten der Zähne radial zurückversetzt sein, gegebenenfalls kann der Versatz auch um ≤ 20-30 µm, vorzugsweise ≤ 15-20 µm, beispielsweise auch ≤ 10-12 µm oder ≤ 8 µm betragen. Der radiale Abstand der Schneidkanten der Zahnzwischenräume von denen der Zähne kann derart bemessen sein, dass bei dem Ritzvorgang bei bestimmungsgemäßer Krafteinwirkung auf das Glasschneidrädchen die Schneidkanten der Zahnzwischenräume in die Glasplatte eindringen, d.h. deren Oberfläche durchdringen. Die aufgewandte Anpresskraft kann hierbei ≤ 10 N, insbesondere ≤ 5-7 N oder ≤ 3-4 N betragen, gegebenenfalls auch ≤ 1-2 N. Die erforderliche Anpresskraft kann hierbei von dem Material der zu ritzenden Glasplatte abhängen. Vorzugsweise ist die Anpresskraft derart gewählt, dass der Tiefenriss sich vollständig über die Stärke der Glasplatte erstreckt. Gegebenenfalls können jedoch auch die Schneidkanten der Zahnzwischenräume zumindest etwa oder genau auf Höhe der Schneidzähne bzw. der radialen Umfangslinie des Rädchens enden und somit die gleiche radiale Erstreckung haben. Dies kann für einen Teil der Umfangserstreckung der Zahnzwischenräume gelten oder für die gesamte Umfangserstreckung derselben. Die Zähne werden dann dadurch definiert, dass diese zumindest am Außenumfang und/oder bei einem radialen Abstand von ca. 5-10 µm von dem Außenumfang des Rädchens eine größere Breite als die Zahnzwischenräume haben.

Die Schneidzähne können eine Längserstreckung in Umfangsrichtung von ≥ 2-5 µm aufweisen. Vorzugsweise weisen die Schneidzähne eine Längserstreckung in Umfangsrichtung des Rädchens von 10-150 µm oder 10-100 µm auf, besonders bevorzugt eine solche von 10-50 oder bis 75 µm, insbesondere ca. 10-30 µm. Die Längserstreckung der Zähne in Umfangsrichtung kann ≤ 250-300 µm betragen, vorzugsweise ≤ 175-200 µm.

Die Längserstreckung der Zahnzwischenräume in Umfangsrichtung des Rädchens kann ≥ 2-5 µm betragen, vorzugsweise 5-150 µm oder 10-100 µm, besonders bevorzugt ca. 10-75 µm oder 20-50 µm. Vorzugsweise beträgt die Längserstreckung der Zahnzwischenräume ≤ 250-300 µm, insbesondere ≤ 175-200 µm.

Vorzugsweise ist die Längserstreckung einiger oder sämtlicher Zähne entlang dem Rädchenumfang kleiner/gleich der Längserstreckung der Zahnzwischenräume in dieser Richtung. Allgemein kann das Verhältnis der Länge der Zwischenräume zu der Länge der Zähne bzw. Zahnrücken in dem Bereich von 5 bis 0,5 bzw. 4 bis 0,75 oder 3 bis 0,75 liegen, besonders bevorzugt in dem Bereich von 2 bis 1 oder 1,75 bis 1 oder 1,5 bis 1. Das Verhältnis der Zahnhöhe, ausgehend von der Basis der Zahnzwischenräume, zu der Längserstreckung der Zahnrücken kann in dem Bereich von 0,5:1 bis 1:10, vorzugsweise 1:1 bis 1:5, besonders bevorzugt ca. 1:2 bis 1:4 liegen.

Es versteht sich, dass die Schneidrädchen nur eine Art von Schneidzähnen und nur eine Art von Zahnzwischenräumen aufweisen können. Die Schneidrädchen können jedoch gegebenenfalls auch mehrere unterschiedliche Arten von Schneidzähnen und/oder mehrere unterschiedliche Arten von Zahnzwischenräumen aufweisen, die in einer regelmäßigen Abfolge aufeinander folgen und eine mehrere Zähne umfassende Identitätsperiode ausbilden. Die unterschiedlichen Arten der Zähne und/oder Zahnzwischenräume können sich jeweils in ihrer Umfangserstreckung, Höhe, Breite und/oder Gestalt unterscheiden. Es können beispielsweise Zähne mehrerer Arten hintereinander angeordnet sein, wobei eine erste Zahnart überwiegend Tiefenrisse erzeugt und eine andere Zahnart, die den Zähnen der ersten Art jeweils unmittelbar nachfolgen kann, überwiegend die Glasplattenoberfläche durchschneidet, um so insgesamt eine optimale Bruchkante zu ergeben. Entsprechend können zusätzlich oder alternativ zwischen einer ersten und gegebenenfalls einer zweiten Zahnart (oder der zweiten Zahnart nachfolgend) weitere Zähne vorgesehen sein, welche einen Schlupf des Zahnrädchens über die Glasplatte verhindern. Es versteht sich, dass die Zahnzwischenräume zwischen den jeweils unterschiedlichen Zähnen unterschiedlich ausgestaltet sein können, gegebenenfalls können die Zahnzwischenräume jedoch jeweils auch in gleicher Weise ausgestaltet sein.

Die Schneidzähne können an der in Schneidrichtung vorderen und/oder hinteren Stirnseite zur Hauptmittelebene keilförmig angestellte Stirnseiten oder Stirnseitenbereiche aufweisen, so dass die Stirnseiten der Zähne mit zunehmendem lateralem Abstand von der einer Hauptebene, insbesondere der Hauptmittelebene, von der Stirnseite nach hinten zurückweichen.

Insbesondere können die Schneidzähne an der in Schneidrichtung vorderen und/oder hinteren Stirnseite (d.h. in Schneidrichtung oder in entgegen gesetzter Richtung) Schneidkanten aufweisen, die sich zumindest über einen Teil der Höhe oder die gesamte Höhe der jeweiligen Zahnstirnseite erstrecken. Diese Schneidkanten können in der Hauptmittelebene des Rädchens liegen, allgemein können sie lateral beabstandet von den Seitenflächen des Rädchens und/oder den seitlichen Zahnflanken angeordnet und zur Hauptmittelebene des Rädchens hin versetzt sein. Die Schneidkanten können in dem mittleren Bereich der Schneidzähne angeordnet sein. Diese Schneidkanten können in in der Höhe ansteigende Übergangsbereiche der Zahnzwischenräume zu den Zahnrücken übergehen. Diese Schneidkanten können sich auch im Wesentlichen senkrecht zur Umfangslinie des Rädchens in Richtung auf das Zentrum des Rädchens erstrecken. Die stirnseitigen Schneidkanten erstrecken sich vorzugsweise bis zu den Schneidkanten der Zahnrücken hin. Die Schneidkanten können an den zur Umfangsrichtung des Rädchens keilförmig angestellten Stirnseiten der Zähne ausgebildet sein. Die radiale Umfangslinie des Rädchens kann kreisbogenförmig sein.

Die Schneidzähne können in der Draufsicht eine im Wesentlichen polygone Gestalt aufweisen, z.B. eine viereckige (insbesondere quadratische, rechteckige oder zumindest im Wesentlichen rautenförmige Gestalt), sechseckige oder auch dreieckige, wobei das Polygon vorzugsweise regelmäßig ausgebildet und/oder symmetrisch zur Hauptmittelebene angeordnet ist. Im Falle einer polygonalen Ausbildung der Zähne oder allgemein kann in der Draufsicht jeweils mindestens eine Ecke zumindest in etwa in der Hauptmittelebene angeordnet sein. Es kann jeweils auch eine Kante des Polygons quer oder senkrecht zur Hauptmittelebene verlaufen. Von den Ecken können jeweils - wie oben beschrieben - Schneidkanten ausgehen, die sich zum Zentrum des Rädchens hin erstrecken oder in einen Übergangsbereich der Zahnzwischenräume übergehen können. Die mindestens eine Zahnecke kann jeweils in oder entgegen der Schneidrichtung vorangestellt sein. Das Polygon kann jeweils eine Breite aufweisen, die ≥ 1/2, ≥ 3/4 oder ≥ der 1-fachen Zahnhöhe ausgehend von der Basis des benachbarten Zahnzwischenraums ist. Die Zahnbreite kann derart bemessen sein, dass sich die Zahnoberseite bis unterhalb der Basis des benachbarten Zahnzwischenraums erstreckt, was in besondere bei auf dem Grat aufgesetzten Zähnen der Fall sein kann.

Die Zahnoberseiten und/oder Zahnseiten können jeweils eine Aufrauung und/oder eine Feinverzahnung aufweisen, die bei dem Ritzvorgang einen Schlupf des Rädchens über die Glasplattenoberfläche verhindern kann. Die Aufrauung kann beispielsweise durch geeignete Schleifmittel erfolgen. Die Strukturhöhe der Aufrauung oder Feinverzahnung kann deutlich kleiner als die Zahnhöhe, beispielsweise ≤ 1/4, ≤ 1/8 oder ≤ 1/16 derselben sein. Die Oberflächenrauhigkeit Rz nach DIN/ISO 4287 kann ≤ 4,5-5 µm oder ≤ 3,5-4 µm oder auch ≤ 2,5-3 µm sein, z.B. in dem Bereich von 0,5 bis 5 µm, vorzugsweise 0,75 bis 2 µm liegen. Die Rauhigkeit Ra nach DIN/ISO 4287 kann ≤ 0,4-0,5 µm sein, z.B. in dem Bereich von 0,05-0,5 µm oder 0,1-0,4 µm, vorzugsweise in den Bereich von 0,1-0,3 µm liegen. Die Feinverzahnung kann regelmäßig oder unregelmäßig sein und in Form von Zahnrippen, die zur Schneidkante hin konvergieren können oder zumindest mit einer Richtungskomponente zur Schneidkante hin verlaufen, in Form isolierter, im wesentlichen punktförmiger Erhebungen oder dergleichen ausgeführt sein. Gegebenenfalls können auch die Zahnzwischenräume eine Aufrauung und/oder Feinstrukturierung aufweisen, für die das oben Gesagte gelten kann und die vorzugsweise nur geringfügig von der Schneidkante der Zahnzwischenräume beabstandet sind oder sich bis zu dieser heran erstreckt, so dass diese Feinstrukturierung bei üblicher Benutzung des Schneidrädchens mit der zu ritzenden Glasplatte in Wechselwirkung kommt.

Bezogen auf den Umfang des Rädchens können die Zahnzwischenräume von Ihrer Basis zum benachbarten Zahnrücken hin über einen Übergangsbereich in einer Höhe ansteigen, wobei der Übergangsbereich über seine Längserstreckung vorzugsweise teilweise oder vollständig als Schneidbereich ausbildet ist. Die Einbringung von Rissen in die Glasplattenoberfläche kann hierdurch auch im Zahnzwischenraumbereich besonders wirksam erfolgen, so dass seitliche Absplitterungen vermieden und eine Bruchfläche mit besonders hoher Kantenqualität erzielt wird. Der Schneidbereich in diesem Übergangsbereich kann zumindest in etwa den gleichen Flankenwinkel aufweisen, wie der Schneidbereich der Zähne und/oder der Zahnzwischenräume im Bereich deren Basis. Hierdurch kann gegebenenfalls der gesamte Umfang des Rädchens als Schneidbereich ausgebildet sein, d.h. auch der gesamte Bereich zwischen den Schneidrücken der Zähne. Der Übergangsbereich zwischen den Zwischenräumen (bzw. der Basis derselben) zu den Zähnen kann entlang des Rädchenumfangs zumindest im Wesentlichen linear, konkav oder konvex ausgebildet sein. Gegebenenfalls können in dem Zahnzwischenraum und/oder in dem Übergangsbereich desselben zu den benachbarten Zähnen ebenfalls zahnartig wirkende Erhebungen vorgesehen sein, die jedoch von den benachbarten Zahnrücken in radialer Richtung zurückstehen.

Die Anordnung der Schneidkanten in den Zahnzwischenräumen hat sich auch dann als vorteilhaft erwiesen, wenn diese Schneidkanten nicht in den zu ritzenden Körper eindringen. Dies wird darauf zurückgeführt, dass diese Schneidkanten auf der Körperoberfläche anwesende Partikel verdrängen, die z.B. aufgrund gewisser Absplitterungen der Ritzlinien vorhanden sind, so dass diese Partikel nicht in den Zahnzwischenräumen auf die Körperoberfläche gepresst werden, was die Oberfläche beeinträchtigen kann. In diesem Fall müssen die Schneidkanten nicht scharfkantig sein.

Schließlich haben sich erfindungsgemäß hergestellte Rädchen auch bei der Erzeugung von Formschnittlinien gegenüber herkömmlichen Rädchen als vorteilhaft erwiesen. Bei einem Formschnitt ist die Schnitt- oder Ritzlinie nicht-linear, z.B. bogenförmig. Die erfindungsgemäß hergestellten Rädchen können der gewünschten Form auch bei engen Krümmungsradien besonders leicht und exakt folgen. Ferner sind die Rädchen bei geschlossenem Formschnitt (d.h. bei in sich geschlossener Formlinie wie z.B. einem Kreisbogen) vorteilhaft einsetztbar, da der Formkörper leichter und exakter von dem umgrenzenden Material separiert werden kann.

Allgemein kann das Rädchen eine radiale Umfangslinie aufweisen, die in einer Hauptebene oder in der Hauptmittelebene des Rädchens angeordnet ist und die zumindest teilweise eine Schneidkante ausbildet, wobei beidseitig der Hauptebene angeordnete Seitenflächen des Rädchens vorgesehen sind, die zu der Hauptebene hin zusammenlaufen. Die Umfangslinie kann kreisbogenförmig sein.

Die erfindungsgemäßen Glasschneidrädchen können aus polykristallinen Diamant (PKD) oder aus einem Hartmetallwerkstoff bestehen, der bevorzugt mit einer Beschichtung versehen ist, die verschleißmindernde Eigenschaften haben kann. Eine derartige Beschichtung kann insbesondere eine nano-strukturierte Hartwerkstoffbeschichtung sein, wobei die Schneidflanken der Schneide auf einer Rillenbreite von im Mittel unter einem Mikrometer poliert sein können. Eine derartige Beschichtung ist in der WO 2004/101455 beschrieben, die hiermit voll inhaltlich mit umfasst sei.

Das Rädchen kann allgemein einen äußeren Durchmesser in dem Bereich von 1 bis 20mm, vorzugsweise 2 bis 10mm oder 2 bis 6mm aufweisen. Die Breite des Rädchens kann in dem Bereich von 0,3 bis 5mm, vorzugsweise 0,6 bis 4mm oder 1 bis 2mm liegen.

Die Neigung der umfänglichen Seitenflächen des Rädchens zu einer Hauptebene, insbesondere zu der durch den Rädchenschwerpunkt laufenden Hauptmittelebene, zu der die Seitenflächen hin zusammenlaufenden, kann ≤ ±60-75°, ≤ ±50-45° oder ≤ ±30 betragen, so dass die Seitenflächen einen Winkel von ≥ 30-60° zueinander einschließen. Es versteht sich, dass die Seitenumfangsflächen in Abhängigkeit von der Eindringtiefe des Rädchens auch einen Winkel von zumindest nahezu 0° aufweisen können, vorausgesetzt, dass zum Ritzen geeignete Zähne aus dem Rädchengrundmaterial herausgearbeitet werden können.

Ferner umfasst die Erfindung eine Schneidemaschine nach dem Oberbegriff von Anspruch 15 mit einem erfindungsgemäßen Schneidrädchen und dem entsprechend ein Verfahren zur Herstellung von Glaskörpern durch Anritzen der Glaskörper mittels eines Glasschneidrädchens und Trennung des Glaskörpers in einzelne kleinere Glaskörper entlang der Ritzlinie. Die Anpreßkraft der Schneidmaschine kann derart eingestellt sein, dass bei ritzendem Vorschub des Schneidrädchens die Schneidkanten der Zahnzwischenräume ritzend mit der Glasplatte zum Angriff kommen. Hierdurch kann eine besonders hohe Kantenqualität der Trennung der Glasplatte erzielt werden. Dies gilt insbesondere für die Herstellung von Glasplatten für Displays elektronischer Einrichtungen wie Flachbildschirme und dergleichen, an die heutzutage besonders hohe Anforderungen zu stellen sein. Obwohl mit Glasschneidrädchen nach der EP 77319314 B1 prinzipiell relativ gute Ergebnisse hinsichtlich der Tiefenrisserzeugung erzielbar sind, sind die mit diesen erzielbaren Kantenqualitäten nicht für sämtliche Anwendungen heutiger Displays geeignet. Im Gegensatz hierzu kann mit Schneidmaschine unter Verwendung erfindungsgemäßer Schneidrädchen auch bei hohen Produktionsgeschwindigkeiten und sehr dünnen Glaskörpern oder Glasplatten eine überraschend hohe Kantenqualität praktisch ohne Absplitterungen erzielt und der Ausschuss wesentlich vermindert werden. Alternativ kann der Anpressdruck auch derart eingestellt sein, dass bei dem gehalterten Glaskörper die Schneidkanten der Zahnzwischenräume mit dem Glaskörper zumindest im Wesentlichen nicht in ritzenden Eingriff kommen, so dass die Ritzlinie zumindest im Wesentlichen durch die Verlängerungslinie der Eindrücke der Zahnrücken im Bereich der Zahnzwischenräume erzeugt wird.

Insbesondere können mittels der erfindungsgemäßen Schneidrädchen auch Dünnglasplatten im oberen Bereich der Glasstärke durch entsprechend eingestellten Anpreßdruck derart geritzt werden, dass ein sich im wesentlichen über die gesamte Stärke der Glasscheibe erstreckender Tiefenriss erzeugt wird.

Es versteht sich, dass die erfindungsgemäßen Schneidrädchen allgemein auch zum Ritzen anderer Glaskörper wie z.B. Glasröhrchen, Hohlglaskörper oder Glaskörper mit gekrümmten Oberflächen wie gewölbte Bildschirme oder Displays eingesetzt werden können. Die Erfindung umfasst somit auch ein Verfahren zum Ritzen derartiger Gegenstände mit erfindungsgemäßen Schneidrädchen und Verfahren zum Teilen derartiger Glaskörper nach Einbringung einer Ritzlinie, insbesondere unter Einbringung eines durch die Materialstärke des Körpers durchgehenden Tiefenrisses. Die Ritzlinie kann hierbei insbesondere in den gewölbten Bereich des Glaskörpers eingebracht werden. Der Glaskörper kann allgemein auch aus einem gehärteten, oberflächenmodifizierten und/oder geätzten Glas bestehen.

Allgemein kann der Glaskörper auch aus einem oberflächlich beschichteten oder oberflächlich mit einer Folie versehenen Glas bestehen. Die Folie kann eine Schutzfolie oder Funktionsfolie sein. Diese kann physikalisch und/oder chemisch mit der Glasoberfläche zur Haftung gebracht sein. Die Beschichtung kann eine aufgedampfte Metallschicht, Kunststoffbeschichtung, optische Beschichtung wie eine Antireflexbeschichtung, wasserabweisende Beschichtung oder sonstige Funktions- oder Schutzschicht sein. Der Ritzvorgang kann nach einer Variante derart durchgeführt werden, dass die Schneidkanten der Zähne und der Zahnzwischenräume die Beschichtung nur teilweise oder praktisch vollständig durchdringen, ohne mit dem Glaskörper selber in ritzenden Eingriff zu kommen. Entsprechend können die Schneidkanten der Zahnzwischenräume in die Folie einschneiden und mit dem Glaskörper zumindest im Wesentlichen nicht in ritzenden Eingriff kommen. Alternativ können die Schneidkanten der Zähne und Zahnzwischenräume auch einen Tiefenriss in dem Glaskörper erzeugen, der den Glaskörper vollständig durchdringen kann. Durch die Schneidkanten in den Zahnzwischenräumen kann jeweils eine saubere, schmale und durchgehende Trennlinie in die Folie oder Beschichtung eingebracht werden.

Die Erfindung wird nachfolgend beispielhaft beschrieben und anhand der Figuren beispielhaft erläutert. Es zeigen:
- Fig. 1: eine Ansicht eines Schneidrädchens nach einer ersten Ausführungsform in Seitenansicht (Fig. 1a) und in Frontalansicht (Fig. 1b), in Detailansichten von der Seite (Fig. 1c), im Querschnitt (Fig. 1d), in Frontalansicht (Fig. 1e) und in perspektivischer Darstellung (Fig. 1f) sowie eine Ansicht des in eine Glasplatte eingedrungenen Schneidbereichs des Rädchens (Fig. 1g),
- Fig. 2: eine weitere Ausführungsform eines Schneidrädchens in Seitenansicht (Fig. 2a) und in Frontalansicht (Fig. 2b), in Detailansichten von der Seite (Fig. 2c), im Querschnitt (Fig. 2d), in Frontalansicht (Fig. 2e) und in perspektivischer Darstellung (Fig. 2f) sowie eine Ansicht des in eine Glasplatte eingedrungenen Schneidbereichs des Rädchens (Fig. 2g),
- Fig. 3: eine weitere Ausführungsform eines Schneidrädchens in Seitenansicht (Fig. 3a) und in Frontalansicht (Fig. 3b), in Detailansichten von der Seite (Fig. 3c), im Querschnitt (Fig. 3d), in Frontalansicht (Fig. 3e) und in perspektivischer Darstellung (Fig. 3f) sowie eine Ansicht des in eine Glasplatte eingedrungenen Schneidbereichs des Rädchens (Fig. 3g),
- Fig. 4: eine Darstellung von Ritzlinien eines herkömmlichen Schneidrädchens mit angeschliffener Schneidkante, eines herkömmlichen Schneidrädchens mit Grobverzahnung und eines erfindungsgemäßen Schneidrädchens,
- Fig. 5: eine schematische Darstellung einer Schneidemaschine mit erfindungsgemäßem Schneidrädchen, und
- Fig. 6: eine schematische Darstellung einer Vorrichtung zur Durchführung des erfindungsgemäßen Verfahrens.

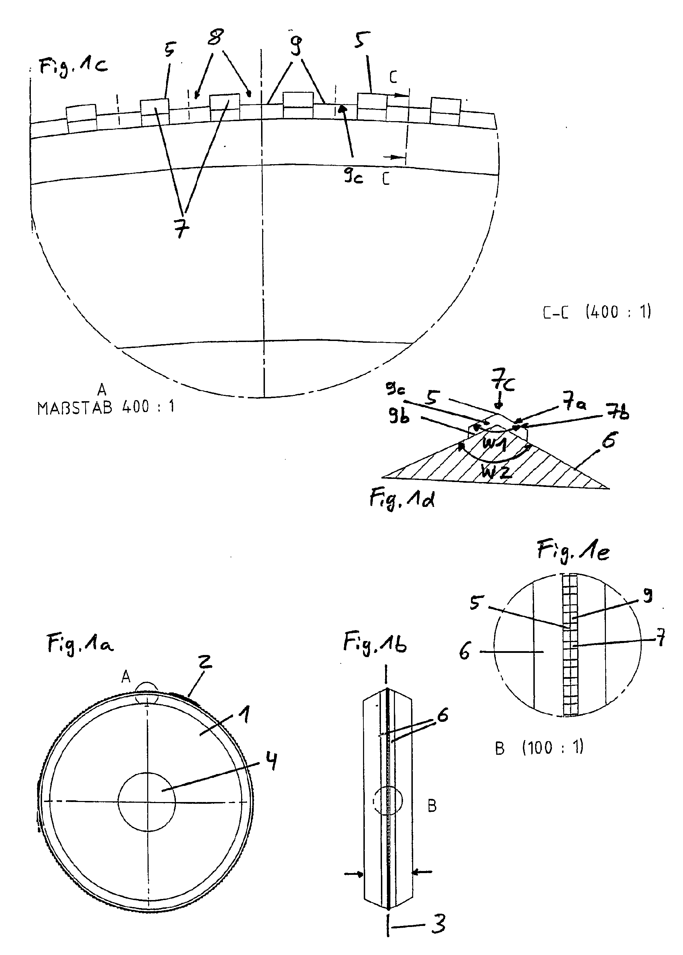

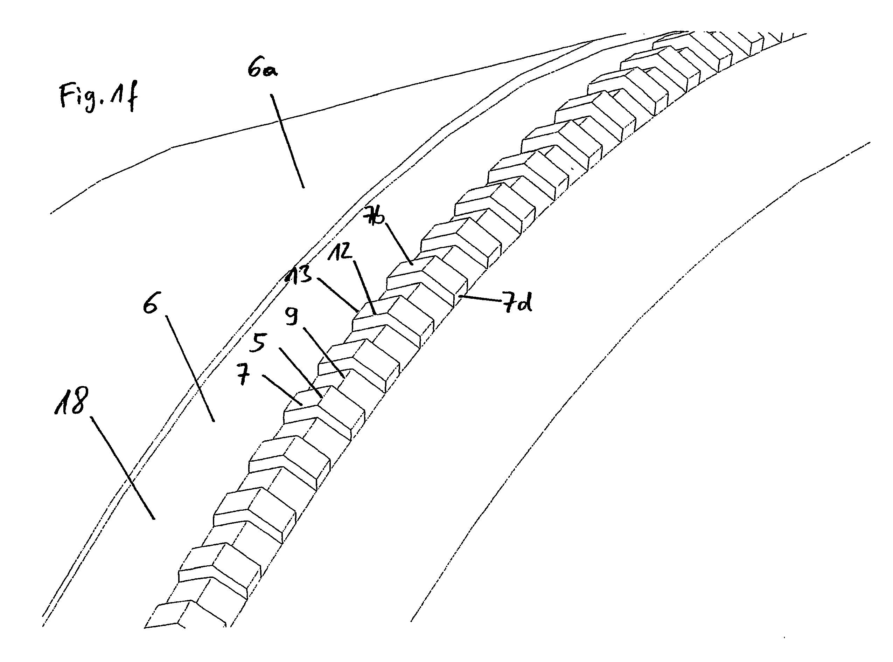

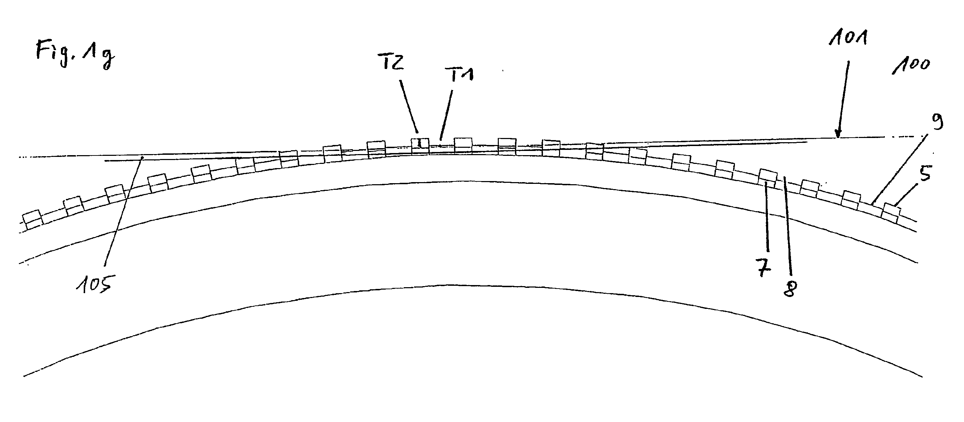

Figur 1 zeigt ein erfindungsgemäßes Glasschneidrädchen 1 zum Erzeugen einer geritzten Sollbruchlinie auf einer Glasplatte mit einer den Außenumfang des Rädchens definierenden radialen Umfangslinie 2, die hier die senkrecht zu der Drehachse des Rädchens stehenden und durch den Schwerpunkt des Rädchens verlaufende Hauptmittelebene 3 des Rädchens bildet. Im Zentrum des Rädchens ist eine Ausnehmung 4 zur Einführung einer Achse vorgesehen. Das Rädchen kann einen äußeren Durchmesser von ca. 3 mm und eine Breite von ca. 0,6 mm aufweisen. Die geneigten Seitenflächen 6 konvergieren zur Hauptmittelebene 3 hin und schneiden sich in dieser. Die Umfangslinie 2 weist eine Vielzahl von Schneidzähnen 7 mit auf der Umfangslinie liegenden Schneidkanten 5 auf, die in Umfangsrichtung durch Zahnzwischenräume 8 voneinander beabstandet angeordnet sind. Das Rädchen kann aus einem vorzugsweise verschleißbeschichteten Hartmetallwerkstoff oder aus polykristalienem Diamat bestehen. Die Zahnoberflächen 7a und gegebenenfalls auch die Seitenflächen 6 des Rädchens können aufgeraut sein, beispielsweise durch einen Schleifvorgang, wobei die radiale Höhe der Schneidzähne über eine etwaige regellose Oberrauhigkeit hinaus geht. Die Oberflächenrauhigkeit Rz (nach DIN/ISO) kann ca. 1,5 µm, die Rauhigkeit Ra ca. 0,15 µm betragen. Gegebenenfalls können die Zahnoberflächen und/oder Seitenflächen auch poliert sein.

Erfindungsgemäß ist zumindest ein Teil oder sämtliche der Zahnzwischenräume 8 mit einer Schneidkante 9 versehen, so dass auch die Bereiche der Zahnzwischenräume bei dem Ritzvorgang schneidend mit der Glasplatte 100 zum Angriff kommen, wie in Fig. 1g dargestellt. Die Schneidkanten der Zahnzwischenräume sind somit lateral nach innen beabstandet von den Einhüllenden der geneigten Seitenflächen des Rädchens und/oder den Seitenflächen der Schneidzähne, vorzugsweise im Bereich der Hauptmittelebene des Rädchens, angeordnet. Überraschenderweise können hierdurch Tiefenrisse sehr großer Tiefe und zugleich Bruchkanten sehr hoher Qualität und praktisch ohne seitliche Absplitterungen erzielt werden. Der Ausschuss insbesondere bei Dünnglasplatten wie z.B. für Displays kann hierdurch wesentlich verringert werden. Die Schneidkanten 9 der Zahnzwischenräume und die Schneidkanten 5 der Zähne liegen in derselben Hauptebene des Rädchens, genauer gesagt der Hauptmittelebene 3, wodurch eine durchgehende und besonders schmale und geradlinige Ritzlinie unter Erzeugung eines sehr tiefen Tiefenrisses erzeugt werden kann. Die Schneidkanten 9 der Zahnzwischenräume sind somit allgemein von den Zahnflanken 7b lateral beabstandet und nach innen zur Hauptmittelebene 3 hin versetzt. Durch die Schneidkanten 9 der Zahnzwischenräume wird auch im Zwischenzahnbereich das anzuritzende Glas vorzugsweise geritzt und seitlich von dem Rädchen verdrängt, wodurch anscheinend auch die Propagation der Tiefenrisse gefördert wird.

Der eingeschlossene Flankenwinkel W2 der Zahnzwischenräume, der durch die beiden geneigten Seitenflächen 6 definiert wird, ist hierbei zumindest in etwa oder genau gleich dem Flankenwinkel W1 der Zähne auf Höhe des Zahnrückens 7c. Die die Schneidkanten ausbildenden Flanken 7b, 9b der Zähne und der Zahnzwischenräume sind hierbei zumindest im Wesentlichen eben ausgeführt. Gegebenenfalls können die Flankenwinkel W1, W2 der Zähne und Zahnzwischenräume sich jedoch voneinander unterscheiden sein, beispielsweise können die Flanken 9b der Zahnzwischenräume einen kleineren Winkel einschließen als die Zahnflanken.

Nach dem Ausführungsbeispiel weisen die Schneidzähne eine Längserstreckung in Umfangsrichtung von ca. 20 µm, die Zahnzwischenräume 8 eine Umfangserstreckung von ca. 30 µm auf. Die Längserstreckung der Zahnzwischenräume ist größer als die der Zähne bzw. der Zahnrücken, das Verhältnis beträgt hier ca. 1,5. Das Verhältnis der Zahnhöhe, ausgehend von der Basis der Zahnzwischenräume, zu der Längserstreckung der Schneidkanten der Zähne beträgt hier ca. 1:3 liegen. Die Zähne und Zahnzwischenräume sind symmetrisch zu der Hauptebene 3 des Rädchens angeordnet.

Die einstückig mit dem Korpus des Rädchens verbundenen Schneidzähne sind nach dem Ausführungsbeispiel auf die geneigten Seitenflächen 6 des Rädchens "aufgesetzt" und stehen von den zu der Hauptmittelebene 3 hin konvergierenden Seitenflächen 6 des Rädchens radial nach außen vor. Die Schneidzähne 7 weisen stirnseitige Schneidkanten 12 auf, die von den in der Hauptmittelebene 3 des Rädchens liegenden Schneidkanten 5 der Zahnrücken seitlich abstehen, genauer gesagt um ca. 90°. Ferner weisen die Zähne diese seitlich begrenzende Seitenkanten 13 auf, die radial von den geneigten Seitenflächen 6 des Rädchens beabstandet sind und hier parallel zur Hauptmittelebene 3 des Rädchens verlaufen, wodurch blockartige Zähne ausgebildet werden. Die Schneidzähne weisen in der Draufsicht eine im wesentlichen rechteckige Oberseite auf. Nach dem Ausführungsbeispiel sowie auch allgemein können sich die Zahnflanken 7b bis zumindest in etwa oder unterhalb der Basis 9c der Zahnzwischenräume erstrecken, die jeweils als Schneidkante ausgebildet sein kann.

Wie in Fig. 1f erkennbar ist, sind die Schneidzähne in einer in dem Rädchenumfang eingearbeiteten Rinne 18 angeordnet. Die Zahnflanken 7b können zu der Hauptebene 3 den gleichen Winkel einschließen, wie die an die Rinne 18 angrenzenden ebenfalls geneigten Seitenflächen 6a. Die Zahnseiten 7d erstrecken sich hierbei bis zum Grund der Rinne.

In Figur 1g ist dargestellt, wie die Zähne und die Zahnzwischenräume in den Glaskörper 100 in Form einer Glasplatte eindringen und die Glaskörperoberfläche 101 durchsetzen. Die Eindringtiefe T1 der Schneidkanten der Zahnzwischenräume kann somit ≥ 5 bis 10 % oder ≥ 15 bis 20 % der Eindringtiefe T2 der Zähne entsprechen, vorzugsweise ≤ 50 bis 75%, was allgemein gelten kann. Die Höhe der sich über die Basis der Zahnzwischenräume hinaus erstreckenden Zähne kann nach Figur 1f derart bemessen sein, dass bei der ersten Berührung eines gegebenen Zahnes mit der Glaskörperoberfläche 101 der in Schneidrichtung unmittelbar nachfolgenden Zahnzwischenraum mit seiner Basis oder mit seiner gesamten Länge noch nicht mit der Glaskörper-oberfläche 101 in Kontakt kommt, was allgemein gelten kann. Das Schneidrädchen stützt sich somit an dem vorderen Ende des Eindringbereiches der Glaskörperoberfläche 101 lediglich an den Zahnrücken bzw. Schneidkanten der ersten Zähne, besonders der ersten beiden Zähne, an der Glaskörperoberfläche ab, so dass die Schneidkante des Zahnzwischenraumes erst nach dem zweiten mit dieser in Angriff kommenden Zahn oder einem weiter zurückliegenden Zahn erstmalig mit der Glaskörperoberfläche in Wechselwirkung kommt. Der Ritzvorgang kann hierdurch hinsichtlich der erzielten Kantenqualität und der Tiefenrisswirkung besonders optimal gestaltet werden. Die sich über die Basis der Zahnzwischenräume hinaus erstreckende Höhe der Schneidzähne ist hierzu entsprechend an den Durchmesser des Schneidrädchens anzupassen. Ist oberflächlich auf der Glasplatte oder allgemein dem Glaskörper eine Folie oder Beschichtung 105 aufgebracht, kann in bestimmten Anwendungsfällen das Schneidrädchen derart positioniert werden, dass die Schneidkanten der Zähne und Zahnzwischenräume lediglich in die Folie oder Beschichtung einschneiden, um in dieser eine saubere und geradlinige Schnittlinie zu Erzeugen, nicht jedoch in den Glaskörper eindringen.

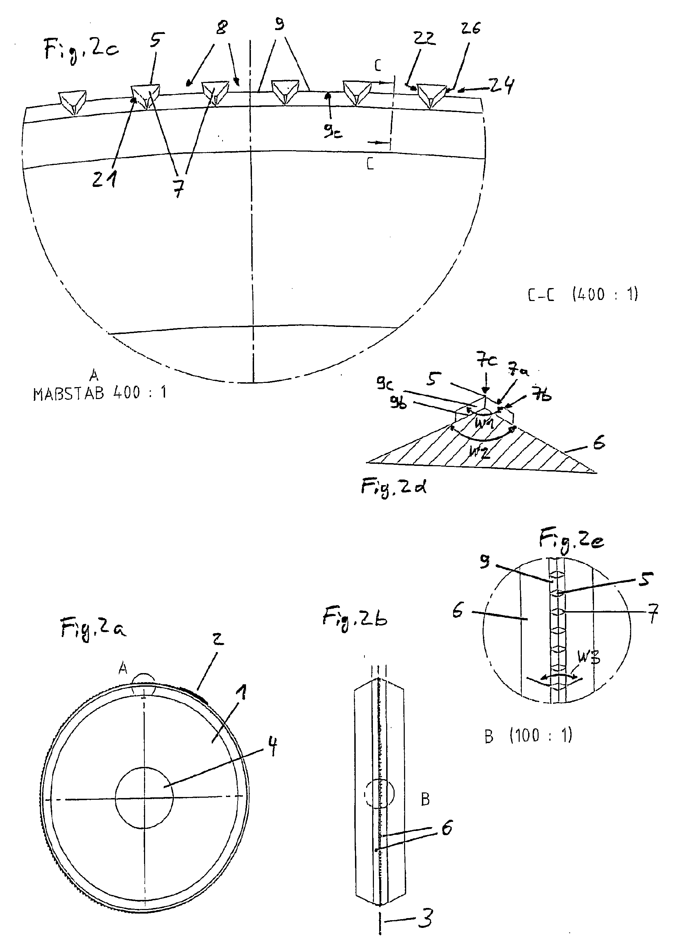

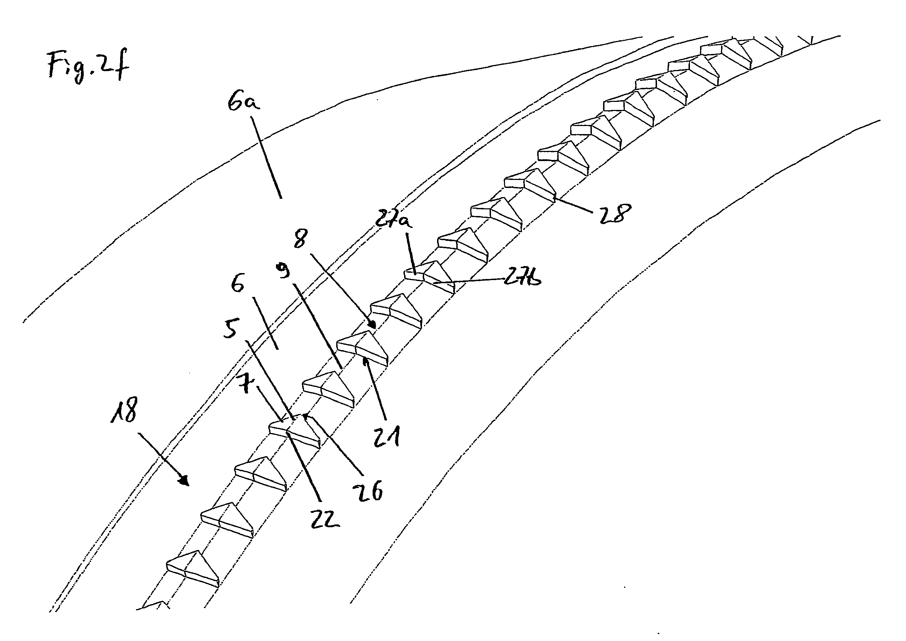

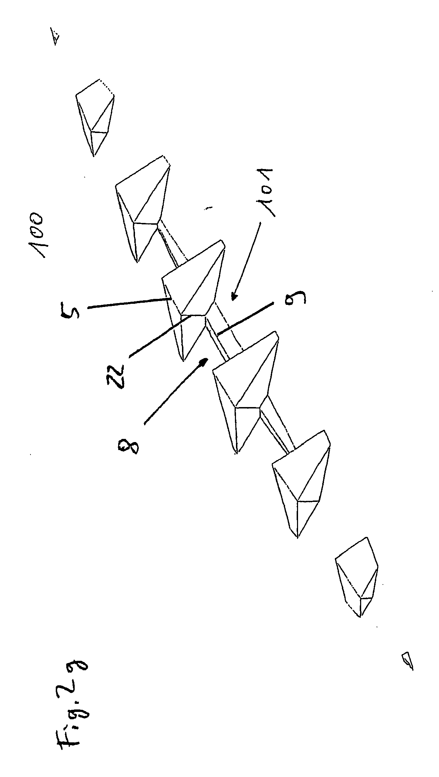

Figur 2 zeigt eine Abwandlung eines Schneidrädchens nach Figur 1, wobei im Übrigen auf das oben Gesagte Bezug genommen wird und gleiche Merkmale mit gleichen Bezugsziffern versehen sind. Die Schneidzähne 7 sind derart ausgeführt, dass der in Schneidrichtung vordere Bereich 21 derselben mit zunehmendem lateralen Abstand von der Hauptmittelebene 3 nach hinten zurückspringt. Der in Schneidrichtung vorderste Bereich der Schneidzähne ist als stirnseitige Schneidkante 22 ausgebildet, die hier in der Hauptmittelebene 3 liegt. Durch die Zahnrücken 7c, die stirnseitigen Schneidkanten 22 der Zähne und die Schneidkanten 9 der Zahnzwischenräume 8 wird eine durchgehende, vorzugsweise in einer Ebene liegende Schneidkante ausgebildet. Entsprechendes gilt für die in Schneidrichtung hinten liegende Stirnseite 24 der Zähne mit der Schneidkante 26, so dass der Zahn in der Draufsicht rautenförmig ist und je eine Schneidzahnecke in der Hauptmittelebene liegt. Die stirnseitigen Schneidkanten können unabhängig von der dargestellten Geometrie der Schneidzähne vorgesehen sein, wodurch ein besonders gutes Ritzbild erzeugt werden kann. Die beidseitig der Hauptebene 3 schräg angestellten Stirnseitenbereiche 27a,b der Zähne können einen Winkel W3 von ≤ 170-175° und ≥ 45-60° miteinander einschließen, vorzugsweise einen Winkel von ca. 90-160°, z.B. von 110-150°, insbesondere ca. 135° (siehe Figur 2e). Dies kann für die in Schneidrichtung vorderen und/oder hinteren Stirnseiten gelten.

Figur 2g zeigt den in eine Glasplatte 100 eindringenden Bereich des Schneidrädchens. Sowohl die stirnseitigen Schneidkanten 22 als auch die Schneidkanten 9 der Zahnzwischenräume tauchen beim Ritzvorgang in die Glasplatte 100 ein. Die Zahnflanken 7b tauchen nur teilweise in die Glasplatte ein, so dass die Zahnseitenflächen oder hier die seitlichen Zahnkanten 28 sowie auch der Grund der Rinne 18 oberhalb der Glasplattenoberfläche verbleiben. Weiterhin ist erkennbar, dass bei beginnendem Eindringen des ersten Zahns in Schneidrichtung in die Glasplatte erst die Zahnzwischenraumschneikante 9 nach dem übernächsten Zahn in die Glasplatte eindringt.

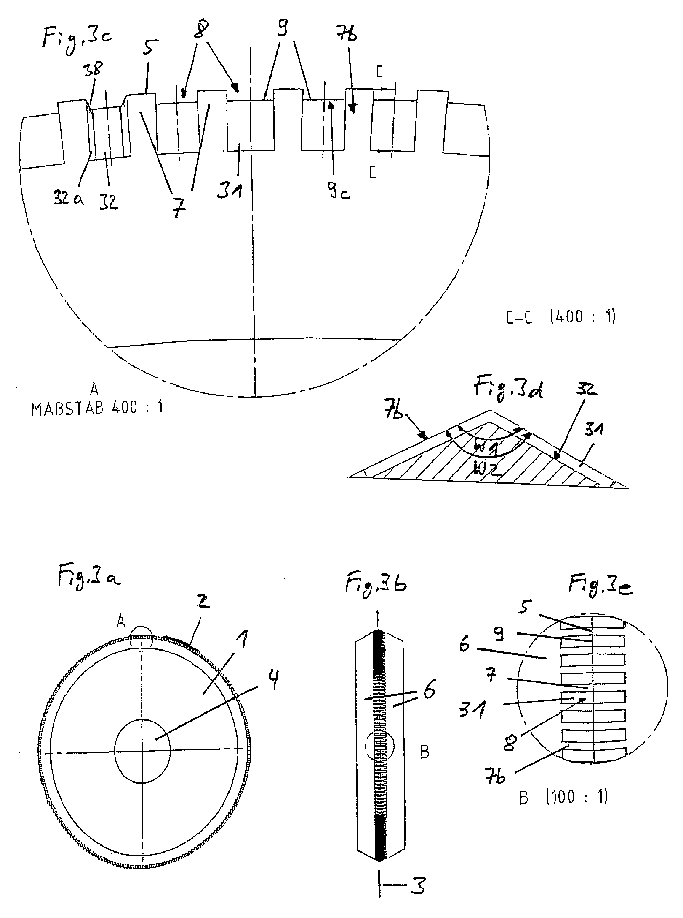

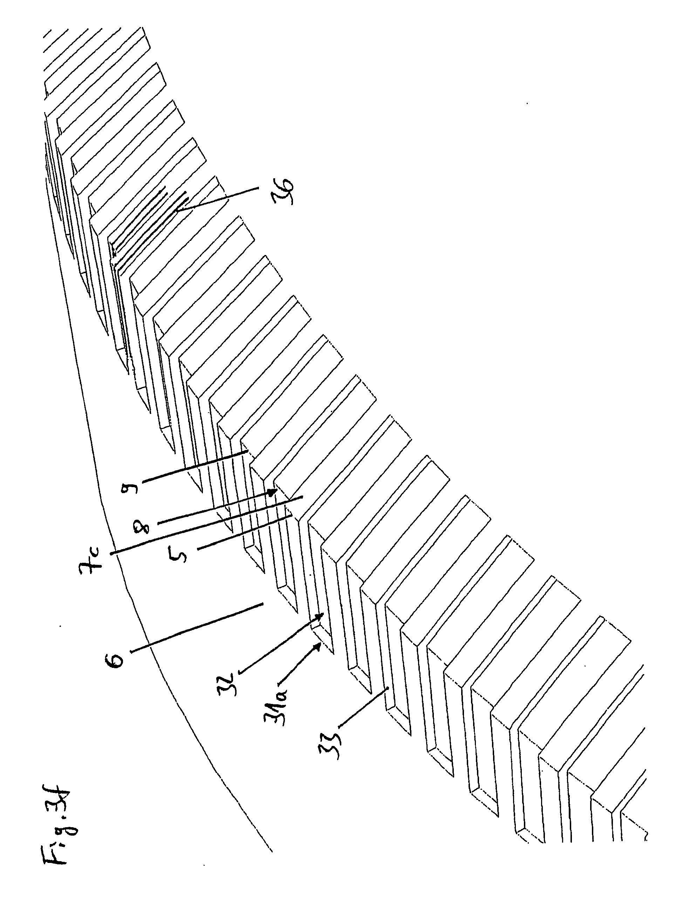

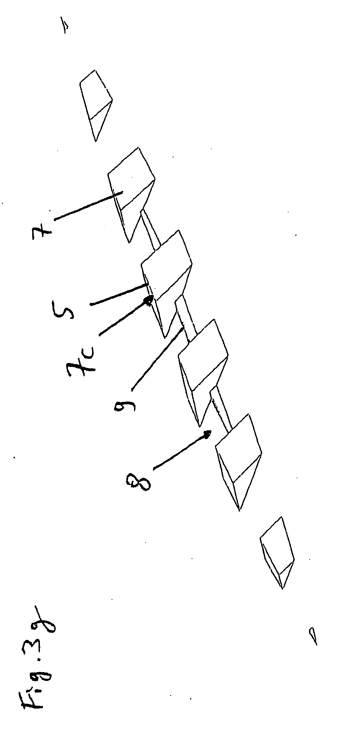

Figur 3 zeigt ein weiteres Ausführungsbeispiel, wobei gleiche Merkmale wie in Figur 1 mit gleichen Bezugsziffern versehen sind. Die Zähne 7 sind durch taschenartige Vertiefungen 31 in beiden der geneigten Seitenflächen 6 des Rädchens ausgebildet, die die Zahnzwischenräume 8 ausbilden. Die Schneidzähne sind hierdurch Bestandteil der geneigten Seitenflächen 6 des Rädchens, so dass die Zahnflanken 7b eine Verlängerung der Seitenflächen darstellen. Die Zahnflanken können somit die gleiche Neigung zu der Hauptebene aufweisen, wie die radial weiter aussenliegenden Seitenflächen 6. Die Flankenwinkel W1 der Zähne können auch hier zumindest in etwa oder genau den Flankenwinkeln W2 der Zahnzwischenräume entsprechen. Die beidseitig der Hauptmittelebene 3 angeordneten Vertiefungen laufen jeweils in den Schneidkanten 9 bzw. der Basis 9c der Zahnzwischenräume 8 zusammen. Der Grund 32 der Vertiefungen kann zumindest im Wesentlichen eben sein. Der Grund 32 der Vertiefungen kann zur Mitte bzw. zur Hauptmittelebene 3 des Rädchens hin ansteigen und zumindest im Wesentlichen parallel zu den Seitenflächen 6 verlaufen. Die Tiefe der Vertiefungen kann über deren Ausdehnung quer zur Hauptmittelebene 3 zumindest im Wesentlichen konstant sein. Die Schneidkanten 9 sind bei dieser Ausgestaltungsart des Rädchens lateral von den seitlichen Endbereichen der Zähne, die hier durch die Endbereiche 31a der Vertiefungen 31 definiert werden, beabstandet und in der Hauptmittelebene 3 angeordnet.

Die Seitenwände 33 sind vorzugsweise zumindest im Wesentlichen eben. Die Seitenwände 33 können zumindest im Wesentlichen senkrecht zu den geneigten Seitenflächen 6 des Rädchens und/oder zumindest im Wesentlichen parallel zu der Hauptmittelebene des Rädchens verlaufen. Der Querschnitt und/oder die Tiefe der Ausnehmungen können über eine gewisse Erstreckung derselben in lateraler Richtung des Rädchens, z.B. ≥ 25-50% der Länge derselben, oder über die gesamte Ausdehnung der Ausnehmung zumindest im Wesentlichen konstant sein. Die Ausnehmungen können ausgehend von der Hauptmittelebene in lateraler Richtung eine Ausdehnung von ≥ 10-20 µm, ≥ 25-50 µm oder ≥ 100 µm aufweisen.

Wie in Fig. 3c, rechts, beispielhaft für eine der Vertiefungen gezeigt ist, können Tiefe und/oder Querschnitt der Vertiefungen auch in Umfangsrichtung des Rädchens variieren, so kann der Grund 32 zu der Oberseite 6a der Seitenflächen hin ansteigende Bereiche 32a aufweisen, die seitlich zu den Übergangsbereichen 35 der Zahnzwischenräume angeordnet sein können. Der Übergangsbereich 35 kann hierbei von der Basis 9c des Zahnzwischenraumes zum Zahnrücken 7c hin in der Höhe ansteigen, wobei der Übergangsbereich sowie auch die Basis der Zahnzwischenräume jeweils einen vorzugsweise durchgehenden Schneidbereich ausbilden. Der Übergangsbereich kann linear oder nicht-linear ansteigen. Eine derartige Ausgestaltung kann bei sämtlichen Zahnzwischenräumen des Rädchens gegeben und auch bei anderen Ausführungsbeispielen vorgesehen sein.

Wie in Figur 3f angedeutet, können die Zähne und/oder die Zahnzwischenräume zusätzliche Feinstrukturierungen 36 aufweisen, beispielsweise in Form von zusätzlichen Rippen, deren radiale Höhe und/oder Umfangbreite größer als die von etwaigen Schleifriefen sind. Es versteht sich, dass derartige Feinstrukturierungen auch bei den anderen Ausführungsformen des Rädchens vorgesehen sein können.

Figur 3g zeigt den Eindringbereich eines Rädchens nach Figur 3 in eine Glasplatte.

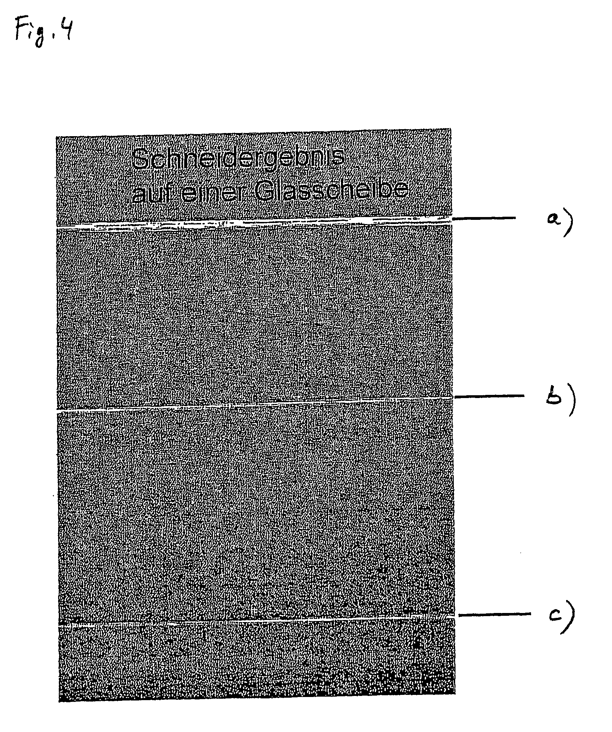

Figur 4 zeigt eine Gegenüberstellung von Ritzbildern eines herkömmlichen Schneidrädchens, bei welchem die geneigten Seitenflächen durch einen Schleifvorgang auf eine Rauhigkeit Rz von 1,5 µm aufgeraut sind (Fig. 4a), und eines Schneidrädchens nach der EP 773 194, bei welchem in der durch die geneigten Seitenflächen 6 des Rädchens ausgebildeten Rippe Vertiefungen eingebracht sind. Diese Vertiefungen können beispielsweise durch ein Schleifrad eingebracht werden, dessen Drehachse senkrecht zu der Drehachse des Glasschneidrädchens steht, oder entsprechend auch durch elektrische Entladungen. Figur 4c zeigt ein Ritzbild eines erfindungsgemäßen Schneidrädchens. Durch das erfindungsgemäße Schneidrädchen kann somit eine gleichmäßigere, schmalere und durchgehende Ritzlinie erzeugt werden, die zu einem entsprechend verbesserten Bruchbild und verbesserter Kantenqualität der getrennten Glasplattenteile führt. Die Schneidrädchenabmessungen stimmen im Übrigen miteinander überein. Die Anpreßkraft wurde jeweils so gewählt, dass die Glasplatte durch den Ritzvorgang möglichst einfach zerteilbar ist.

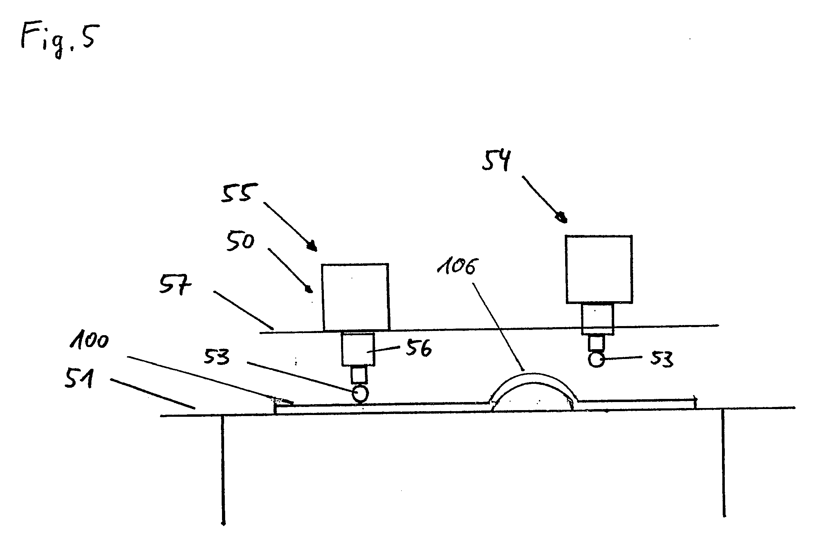

Fig. 5 zeigt stark schematisiert eine Schneidmaschine 50 mit einem Tisch 51 zur Halterung eines zu ritzenden Glaskörpers 100 mit einem zu ritzenden gewölbten Berech 106 und mit einem Schneidkopf 52 zur Aufnahme eines Schneidrädchens 53. Der Schneidkopf 52 ist in eine von der Glasplatte beabstandete Ruheposition 54 und in eine mit einer Anpresskraft des Schneidrädchens gegen die Glasplatte anliegenden Arbeitsposition 55 überführbar. Ferner sind Mittel 56 zur Einstellung der Anpresskraft des Schneidrädchens gegen die Glasplatte vorgesehen sind. Die Schneidmaschine weist eine Führung 57 auf, so dass der Schneidkopf 52 mit Schneidrädchen 53 zum Ritzen der Glasplatte entlang einer Linie geführt werden kann. Das Schneidrädchen weist an seiner Außenumfangslinie eine Schneidkante mit in Umfangsrichtung voneinander beabstandeten Schneidzähne auf, deren Höhe über eine etwaige regellose Oberflächenrauhigkeit hinausgeht und die durch in den Seitenflächen des Rädchens eingearbeiteten Vertiefungen voneinander getrennt sind. Hierdurch werden Zahnzwischenräume ausgebildet. Die Schneidrädchen können erfindungsgemäße Rädchen darstellen, z.B. solche nach den Ausführungsbeispielen. Die Anpresskraft der Rädchen 53 an die Glasplatte 100 ist derart eingestellt, dass bei ritzendem Vorschub des Schneidrädchens die Basis der Zahnzwischenräume ritzend mit der Glasplatte zum Angriff kommt. Mittels des erfindungsgemäßen Rädchens können somit bei Glasplatten auch mit einer Stärke von ≥ 1,5mm bei einer ausreichend hohen Anpreßkraft sich über die gesamte Stärke derselben erstreckende Tiefenrisse und hierdurch ausgezeichnete Bruchkanten erzeugt werden.

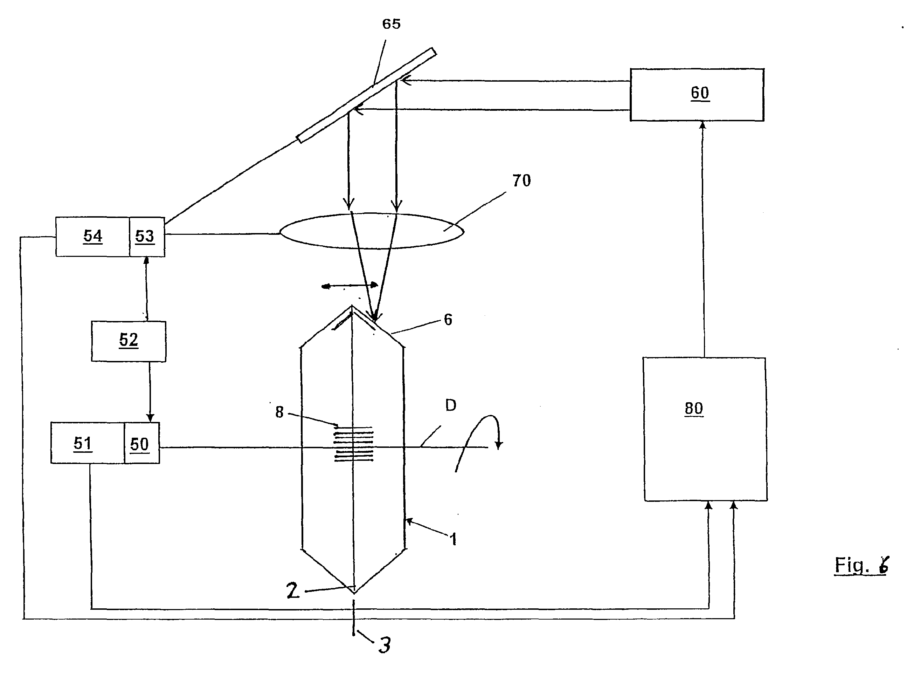

Figur 6 zeigt eine Vorrichtung zur Durchführung des erfindungsgemäßen Verfahrens und zur Herstellung der Rädchen nach den Figuren 2 und 3. Das um die Achse D drehbar gelagerte Schneidrädchen 1 wird durch den Motor 50 in Drehung versetzt. Zur Strukturierung der Außenumfangsfläche des Rädchens im Bereich der Schneidkante wird ein Kurzpulslaser 60, insbesondere ein Pikosekundenlaser, eingesetzt. Der Laserstrahl wird über die Umlenkeinrichtung 65, die als Umlenkspiegel ausgebildet sein kann, und die Fokussieroptik 70 auf die Außenumfangsfläche des Rädchens im Bereich der radialen Umfangslinie 2 gerichtet. Der Laserstrahl kann hierbei auf die geneigten Seitenflächen 6 des Rädchens gelenkt werden, um Material des Rädchengrundkörpers unter Ausbildung der Zahnstruktur abzutragen. Während der Drehung des Schneidrädchens mittels des Motors kann der Laserstrahlfokus parallel zur Drehachse D des Rädchens verschoben werden, um zur Ausbildung der Zahnstruktur Ausnehmungen in den Außenumfang des Rädchens einzubringen. Hierzu ist eine Verschiebeeinrichtung 53 für eine Umlenkeinrichtung 65 und/oder eine Fokussieroptik 70 des Laserstrahls, beispielsweise in Form einer Verschiebeachse, vorgesehen. Der Motor 50 und/oder der diesem zugeordnete Drehgeber 51 zur Einstellung des Rädchenverdrehung sowie die Verschiebeeinrichtung 53 werden durch die Steuerung 52 gesteuert, um die zu strukturierenden Bereiche der Schneidenoberfläche, d.h. des die Schneidkante umfassenden Bereichs um die radiale Umfangslinie des Rädchens, gegenüber dem Laserstrahl auszurichten.

Die laterale Lage des Laserstrahls zur Hauptmittelebene 3 des Rädchens bzw. zur radialen Umfangslinie 2 wird durch einen Positionsgeber gesteuert, der auf eine Verschiebeachse 53 der Umlenkeinrichtung wirkt, um den Laserstrahl lateral zu positionieren (siehe Pfeil). Diese Positionierung kann der Umfangspositionierung des Rädchens, beispielsweise in Abhängigkeit von der Verdrehstellung des Rädchens um seine Drehachse in Bezug auf die Einstrahlrichtung des Laserstrahls, überlagert sein oder abwechselnd mit dieser erfolgen, so dass der Laserstrahl die gesamte zu strukturierende Umfangsoberfläche des Rädchens abfahren kann. Die Positionssignale des die laterale Lage des Laserstrahls erfassenden Positionsgebers 54 und des die Verdrehlage des Rädchens erfassenden Drehgebers 51, der dem Motor 50 zugeordnet ist, werden der Laseransteuerung 80 zugeleitet, die Pulsfolge des Lasers 60 steuert, um die Zahnzwischenräume 8 und die sonstigen Strukturierungen der Rädchenumfangsfläche zu erzeugen. Es versteht sich, dass die Umfangsfläche des Rädchens auch auf andere Weise relativ zum Laserstrahl bewegt werden kann, um eine Materialabtragung ermöglichend von dem Laserstrahl abgetastet zu werden.

In Abhängigkeit von der Positionierung des Laserstrahls gegenüber dem Rädchen kann die Pulsleistung bzw. Pulsfolge des Kurzpulslasers somit moduliert werden. Die Abtragtiefe kann hierdurch im Bereich von bis zu ≤ 1/10 µm oder einigen wenigen Zehnteln µm sehr exakt gesteuert werden, so dass geometrisch sehr exakt definierte Zahnflanken aus dem Rädchengrundkörper herausgearbeitet werden können. Der Laserstrahl kann hierbei durch eine Fokussiereinrichtung auf die abzutragende Stelle des Rädchenumfangs fokussiert werden. Der Laserstrahl kann im Fokus einen Durchmesser von ≤ 30-50 µm oder ≤ 25-20 µm, vorzugsweise ≤ 15-20 µm oder ≤ 12-15 µm aufweisen, besonders bevorzugt ≤ 8-10 µm, beispielsweise im Bereich von 2-20 µm oder 5-12 µm.

Die Leistungsansteuerung des Lasers mittels der Steuerungseinrichtung 80 kann mittels einer Look-up-Tabelle erfolgen, die in Abhängigkeit von den Positionssignalen des Positionsgebers 54 und des Drehgebers 51 die Pulsfolge bestimmt, um eine für die gewünschte Strukturierung gewünschte Laserleistung auf der Rädchenumfangsfläche einzukoppeln und das Material des Rächengrundkörpers an den gewünschten Stellen in dem gewünschten Umfang zu verdampfen. Es versteht sich, dass an den von dem Laserstrahl abgetasteten Stellen, an denen eine Strukturierung nicht erwünscht ist wie z.B. an den Zahnrücken, der Laser deaktiviert bleibt, d.h. keinen Puls aussendet. Der Laserstrahl kann somit sehr exakt seitlich der radialen Umfangslinie über den Außenumfang des Rädchens bzw. über die geneigten Seitenflächen geführt werden, um hierdurch durch eine geeignete Pulsfolge den zur Ausbildung der gewünschten Zahnstrukturierung erforderlichen Materialabtrag zu erzielen. Allgemein können hierdurch auch Bereiche der Umfangsfläche des Rädchens strukturiert werden, die radial näher der Drehachse angeordnet sind als der Grund der Zahnzwischenräume in der Hauptebene 3 des Rädchens, beispielsweise seitlich von der Hauptebene weiter beabstandete Bereiche der Umfangsfläche, so dass auf einfache Weise z.B. auch die Zahnzwischenräume strukturiert oder Schneidkanten in den Zahnzwischenräume ausgebildet werden können.

Der Laserstrahl kann im Wesentlichen parallel zur Hauptebene auf die geneigten Seitenflächen des zu strukturierenden Rädchenumfang gerichtet werden, so dass der Laserstrahl in einem Winkel auf die Seitenflächen auftrifft, wobei überraschenderweise eine ausreichende oder auch praktisch nicht beeinträchtigte Energieeinkoppelung stattfindet. Diese Anordnung ist konstruktiv besonders einfach. Der Laserstrahl kann jedoch auch in einem Winkel zur Hauptebene des Rädchens auf die zu strukturierenden Seitenflächen gelenkt werden, oder auch senkrecht zu diesen, wozu eine geeignete optische Umlenkeinrichtung vorgesehen sein kann.

## Patentansprüche

1. Glasschneidrädchen zum Erzeugen einer geritzten Sollbruchlinie auf, wobei das Schneidrädchen eine einen Außenumfang des Rädchens definierende radiale Umfangslinie (2) aufweist, die in einer Hauptebene (3) des Rädchens liegt und zumindest teilweise eine Schneidkante (5) ausbildet, wobei die Schneidkante Schneidzähne (7) aufweist, die in Umfangsrichtung durch Zahnzwischenräume (8) voneinander beabstandet angeordnet sind und deren Höhe und/oder Umfangserstreckung über eine etwaige regellose Oberflächenrauhigkeit hinausgeht und wobei zumindest ein Teil oder sämtliche der Zahnzwischenräume (8) eine Schneidkante (9) aufweisen, **dadurch gekennzeichnet,**
**dass** die Schneidkanten der Zahnzwischenräume und die Schneidkanten der Zähne in derselben Hauptebene des Rädchens oder dass sämtliche der Schneidkanten der Zähne und der Zahnzwischenräume in einem lateralen Abstand von ≤ 5 µm von der die Umfangslinie des Rädchens umfassenden Hauptmittelebene liegen,
und
(i) **dass** die Zahnoberseiten und/oder Zahnseiten und/oder Zahnzwischenräume eine Aufrauung mit einer Oberflächenrauhigkeit Rz nach DIN/ISO 4287 von 0,5 bis 5 µm und/oder eine Rauhigkeit Ra nach DIN/ISO 4287 von 0,05 bis 0,5 µm aufweisen, und/oder
(ii) **dass** die Zahnoberseiten eine regelmäßige Feinverzahnung mit einer Strukturhöhe ≤ 1/4 der Zahnhöhe aufweist, und/oder
(iii) **dass** das Rädchen aus einem Hartmetallwerkstoff besteht und mit einer Beschichtung mit verschleißmindernden Eigenschaften versehen ist, und/oder
(iv) **dass** die geneigten Seitenflächen (6) des Rädchens in einem Grat zusammenlaufen und dass die Schneidzähne (7) auf dem Grat aufgesetzt sind, und/oder dass die Schneidzähne in einer Rinne der Umfangsfläche des Rädchens angeordnet sind, und/oder
(v) **dass** die Längserstreckung der Zahnzwischenräume im Bereich von 2-300 µm liegt, ausgenommen die Werte 19 µm, 28 µm, 32 µm, 34 µm und 40 µm.

2. Rädchen nach Anspruch 1, **dadurch gekennzeichnet, dass** die Zahnzwischenräume (8) durch Vertiefungen in zumindest einer oder beiden Seitenflächen (6) des Rädchens ausgebildet sind.

3. Rädchen nach Anspruch 1 oder 2, **dadurch gekennzeichnet , dass** zumindest einige der Schneidkanten (9) der Zahnzwischenräume (8) zum jeweils benachbarten Zahnrücken (7c) hin ansteigende Bereiche aufweisen.

4. Rädchen nach einem der Ansprüche 1 bis 3, **dadurch gekennzeichnet, dass** der eingeschlossene Flankenwinkel (W2) der Zahnzwischenräume (8) zumindest im Wesentlichen gleich dem Flankenwinkel (W1) der Zähne (7) ist.

5. Rädchen nach einem der Ansprüche 1 bis 4, **dadurch gekennzeichnet, dass** die Flanken der Zahnzwischenräume (8) zumindest im Wesentlichen eben ausgeführt sind.

6. Rädchen nach einem der Ansprüche 1 bis 5, **dadurch gekennzeichnet , dass** (i) die Schneidkanten (9) der Zahnzwischenräume (8) um ca. 0,5 µm bis 25 µm von den Schneidkanten der Zähne (7) radial zurückversetzt sind und/oder (ii) dass die Schneidzähne (7) oder die Zahnzwischenräume (8) oder Schneidzähne und Zahnzwischenräume (7,8) jeweils eine Längserstreckung in Umfangsrichtung von ca. 5 µm bis 200 µm aufweisen.

7. Rädchen nach einem der Ansprüche 1 bis 6, **dadurch gekennzeichnet , dass** die Zahnzwischenräume (8) von ihrer Basis zum Zahnrücken hin über einen Übergangsbereich in der Höhe ansteigen und dass der Übergangsbereich zumindest teilweise als Schneidkante (38) ausgebildet ist.

8. Rädchen nach einem der Ansprüche 1 bis 7, **dadurch gekennzeichnet, dass** die Umfangserstreckung der Zähne (7) kleiner/gleich der Umfangserstreckung der Zahnzwischenräume (8) ist.

9. Rädchen nach einem der Ansprüche 1 bis 8, **dadurch gekennzeichnet, dass** das Rädchen aus polykristallinem Diamant (PKD) oder aus einem Hartmetallwerkstoff besteht.

10. Schneidmaschine mit einem Tisch zur Halterung eines zu ritzenden Glaskörpers und mit einem Schneidkopf zur Aufnahme eines Schneidrädchens, wobei der Schneidkopf in eine von der Glasplatte beabstandete Ruheposition und in Arbeitsposition, bei welcher das Schneidrädchen mit einer Anpresskraft gegen den Glaskörper anliegt, überführbar ist, wobei Mittel zur Einstellung der Anpresskraft des Schneidrädchens gegenüber der Glasplatte vorgesehen sind, und wobei der Schneidkopf zum Ritzen des Glaskörpers mit an dieser anliegendem Schneidrädchen entlang einer Linie führbar ist,
wobei an dem Schneidkopf (56) ein Schneidrädchen (53) angeordnet ist, welches eine einen Außenumfang des Rädchens definierende radiale Umfangslinie aufweist, die in einer Hauptebene (3) des Rädchens liegt und zumindest teilweise eine Schneidkante (5) ausbildet, wobei die Schneidkante Schneidzähne (7) aufweist, die in Umfangsrichtung durch Zahnzwischenräume (8) voneinander beabstandet angeordnet sind und deren Höhe und/oder Umfangserstreckung über eine etwaige regellose Oberflächenrauhigkeit hinausgeht, und wobei zumindest ein Teil oder sämtliche der Zahnzwischenräume (8) eine Schneidkante (9) aufweisen, **dadurch gekennzeichnet, dass** an dem Schneidkopf ein Schneidrädchen angeordnet ist, bei welchem die Schneidkanten der Zahnzwischenräume und die Schneidkanten der Zähne in derselben Hauptebene des Rädchens oder dass sämtliche der Schneidkanten der Zähne und der Zahnzwischenräume in einem lateralen Abstand von ≤ 5 µm von der die Umfangslinie des Rädchens umfassenden Hauptmittelebene liegen.

11. Schneidmaschine nach Anspruch 10 mit einem Schneidrädchen nach einem der Ansprüche 1 bis 9.

12. Handglasschneider mit einer Handhabe zum manuellen führen des Glasschneiders und einer Aufnahme für ein Glasschneidrädchen, wobei an der Aufnahme ein Schneidrädchen (1) angeordnet ist, welches eine einen Außenumfang des Rädchens definierende radiale Umfangslinie aufweist, die in einer Hauptebene (3) des Rädchens liegt und zumindest teilweise eine Schneidkante (5) ausbildet, wobei die Schneidkante Schneidzähne (7) aufweist, die in Umfangsrichtung durch Zahnzwischenräume (8) voneinander beabstandet angeordnet sind und deren Höhe und/oder Umfangserstreckung über eine etwaige regellose Oberflächenrauhigkeit hinausgeht, und wobei zumindest ein Teil oder sämtliche der Zahnzwischenräume (8) eine Schneidkante (9) aufweisen, **dadurch gekennzeichnet, dass** das Schneidrädchen derart ausgebildet ist, dass die Schneidkanten der Zahnzwischenräume und die Schneidkanten der Zähne in derselben Hauptebene des Rädchens oder dass sämtliche der Schneidkanten der Zähne und der Zahnzwischenräume in einem lateralen Abstand von ≤ 5 µm von der die Umfangslinie des Rädchens umfassenden Hauptmittelebene liegen.

13. Handglasschneider nach Anspruch 12 mit einem Schneidrädchen nach einem der Ansprüche 1 bis 9.

14. Verfahren zur Herstellung von Glaskörpern durch Anritzen eines vorgegebenen Glaskörpers mittels eines Glasschneidrädchens und Trennung des Glaskörpers in einzelne kleinere Glaskörper entlang der Ritzlinie, unter Verwendung eines Glasschneidrädchens, welche eine einen Außenumfang desselben definierende radiale Umfangslinie (2) aufweist, die in einer Hauptebene (3) des Rädchens liegt und zumindest teilweise eine Schneidkante (5) ausbildet, wobei die Schneidkante Schneidzähne (7) aufweist, die in Umfangsrichtung durch Zahnzwischenräume (8) voneinander beabstandet angeordnet sind und deren Höhe und/oder Umfangserstreckung über eine etwaige regellose Oberflächenrauhigkeit hinausgeht und wobei zumindest ein Teil oder sämtliche der Zahnzwischenräume (8) eine Schneidkante (9) aufweisen, **dadurch gekennzeichnet , dass** ein Schneidrädchen verwendet wird, bei welchem die Schneidkanten der Zahnzwischenräume und die Schneidkanten der Zähne in derselben Hauptebene des Rädchens oder dass sämtliche der Schneidkanten der Zähne und der Zahnzwischenräume in einem lateralen Abstand von ≤ 5 µm von der die Umfangslinie des Rädchens umfassenden Hauptmittelebene liegen, und dass
(i) ein Glaskörper eingesetzt wird, welcher (a) eine gekrümmte Oberfläche aufweist, und/oder (b) welcher aus einem gehärteten Glas, einem oberflächenmodifizierten Glas, einem geätzten Glass oder einem oberflächlich beschichteten oder oberflächlich mit einer Folie versehenen Glas besteht, oder
(ii) der Glaskörper eine Glasplatte zur Herstellung von Flachdisplays elektronischer Geräte ist, oder
(iii) als Ritzlinie eine geschlossene Formschnittlinie erzeugt wird, oder
(iv) dass in einem geöffneten Schnitt geritzt wird, bei welchem durch den Ritzvorgang bereits eine gewisse Separation der getrennten Teile des Körpers erfolgt.

15. Verfahren nach Anspruch 14, **dadurch gekennzeichne**t , dass ein Schneidrädchen nach einem der Ansprüche 1 bis 9 verwendet wird.

## Claims

1. Cutting wheel for producing a scribed predetermined breaking line,
wherein said cutting wheel has a radial circumferential line (2) defining an outer circumference of the wheel, said radial circumferential line lying in a main plane (3) of the cutting wheel and forms a cutting edge (5), at least partially, wherein said cutting edge includes cutting teeth (7) which are circumferentially spaced from each other by tooth interstices and the height and/or circumferential extension thereof exceeds a possible irregular surface roughness, and wherein at least a part or all of the teeth interstices (8) include a cutting edge (9), **characterized in**
**that** the cutting edges of the tooth interstices and the cutting edges of the teeth lie in the same main plane of the wheel or that all cutting edges of the teeth and of the tooth interstices are laterally spaced from the main center plane comprising the circumferential line of the wheel by ≤ 5 µm, and that
(i) the tooth upper faces and/or the tooth lateral faces and/or the tooth interstices exhibit a surface wrinkling at a surface roughness Sz according to DIN/ISO 4287 of 0.5 to 5 µm and/or a roughness Ra according to DIN/ISO 4287 of 0.05 to 0.5 µm, and/or
(ii) the tooth upper faces have a regular fine toothing with a height of structure of ≤ 1/4 of the tooth height, and/or
(iii) **that** the wheel consists of a hard metal material and is provided with a coating that has wear-reducing properties, and/or
(iv) **that** the inclined lateral faces (6) of the wheel converge into a ridge and that the cutting teeth (7) are attached to that ridge, and/or that the cutting teeth are arranged within a groove of the circumferential surface of the wheel, and/or
(v) **that** the longitudinal extension of the tooth interstices is within a range of 2-300 µm, with the exception of the values of 19 µm, 28 µm, 32 µm, 34 µm, and 40 µm.

2. Wheel according to claim 1, **characterized in that** the tooth interstices (8) are formed by recesses in at least one or both lateral faces (6) of the wheel.

3. Wheel according to claim 1 or 2, **characterized in that** at least some fo the cutting edges (9) of the tooth interstices (8) include regions ascending towards the respective adjacent tooth backs (7c).

4. Wheel according to one of the claims 1 to 3, **characterized in that** the included flank angle (W2) of the tooth interstices (8) is equal to the flank angle (W1) of the teeth (7), at least substantially.

5. Wheel according to one of the claims 1 to 4, **characterized in that** the flanks of the tooth interstices (8) are plane, at least substantially.

6. Wheel according to one of the claims 1 to 5, **characterized in that** (i) the cutting edges (9) of the tooth interstices (8) are radially offset to the rear with respect to the cutting edges of the teeth (7) by approx 0.5 µm to 25 µm and/or (ii) that the cutting teeth (7) or the tooth interstices (8) or the cutting teeth and tooth interstices (7, 8) each have a longitudinal extension of approx 5 µm to 200 µm in the circumferential direction.

7. Wheel according to one of the claims 1 to 6, **characterized in that** the tooth interstices (8) increase in height from their base toward the tooth back via a transition region, and that said transition region is constructed as a cutting edge (38), at least partially.

8. Wheel according to one of the claims 1 to 7, **characterized in that** the circumferential extension of the teeth (7) is smaller than or equal to the circumferential extension of the tooth interstices (8).

9. Wheel according to one of the claims 1 to 8, **characterized in that** the wheel consists of a polycrystalline diamond (PCD) or of a hard metal material.

10. Cutting machine having a table for supporting a glass body to be scribed and having a cutting head for receiving a cutting wheel, wherein said cutting head can be moved from a rest position spaced from the glass plate and a working position in which the cutting wheel is applied against the glass body at a pressing force, wherein means for adjusting the pressing force of the cutting wheel relative to the glass plate are provided, and wherein the cutting head for scribing the glass body with the cutting wheel applied against the same can be guided along a line, wherein on said cutting head (56) a cutting wheel (53) is arranged that presents a radial circumferential line which defines an outer circumference of the cutting wheel, which radial circumferential line lies in a main plane (3) of the wheel and forms a cutting edge (5), at least partially, wherein said cutting edge (5) comprises cutting teeth (7), which are circumferentially spaced from each other by tooth interstices (8) and the height and/or circumferential extension thereof exceeds a possible irregular surface roughness, and wherein at least a part or all of the teeth interstices (8) include a cutting edge (9), **characterized in that** on the cutting head a cutting wheel is arranged in which the cutting edges of the tooth interstices and the cutting edges of the teeth lie in the same main plane of the wheel or that all cutting edges of the teeth and of the tooth interstices are laterally spaced from the main center plane comprising the circumferential line of the wheel by ≤ 5 µm.

11. Cutting machine according to claim 10, comprising a cutting wheel according to one of the claims 1 to 9.

12. Manual glass cutting tool having a handle for manually guiding the glass cutting tool and having a seat for receiving a glass cutting wheel, wherein on said seat a cutting wheel (1) is arranged that presents a radial circumferential line which defines an outer circumference of the wheel and which lies in main plane (3) of said wheel and forms a cutting edge (5), at least partially, wherein the cutting edge comprises cutting teeth (7) which are circumferentially spaced from each other by tooth interstices (8) and the height and/or circumferential extension thereof exceeds a possible irregular surface roughness, and wherein at least a part or all of the teeth interstices (8) include a cutting edge (9), **characterized in that** the cutting edges of the tooth interstices and the cutting edges of the teeth lie in the same main plane of the wheel or that all cutting edges of the teeth and of the tooth interstices are laterally spaced from the main center plane comprising the circumferential line of the wheel by ≤ 5 µm.

13. Manual glass cutting tool according to claim 12, comprising a cutting wheel according to one of the claims 1 to 9.

14. Process for producing glass bodies by scribing a predetermined glass body using a glass cutting wheel and by separating said glass body into individual smaller glass bodies along a scribing line, using a glass cutting wheel, which scribing line presents a radial circumferential line (2), which defines an outer circumference of the same and which lies in a main plane (3) of said wheel and forms a cutting edge (5), at least partially, wherein said cutting edge comprises cutting teeth (7), which are circumferentially spaced from each other by tooth interstices (8) and the height and/or circumferential extension thereof exceeds a possible irregular surface roughness, and wherein at least a part or all of the teeth interstices (8) include a cutting edge (9), **characterized in that** a cutting wheel is used in which the cutting edges of the tooth interstices and the cutting edges of the teeth lie in the same main plane of the wheel or that all cutting edges of the teeth and of the tooth interstices are laterally spaced from the main center plane comprising the circumferential line of the wheel by ≤ 5 µm, and that
(i) a glass body is used which (a) has a curved surface and/or (b) consists of hard glass, surface-modified glass, etched glass or surface-coated glass or glass that is provided with a plastic film on the surface thereof, or
(ii) said glass body is a glass plate for producing flat screens of electronic devices, or
(iii) a closed form-cutting line is produced as a scribing line, or
(iv) that scribing is carried out in an opened cut, in which a certain separation of the separated parts of the body already takes place as a result of said scribing process.

15. Process according to claim 14, **characterized by** using a cutting wheel as defined in one of the claims 1 to 9.

## Revendications

1. Roulette de coupe-verre pour produire une ligne gravée destinée à la rupture, ladite roulette de coupe ayant une ligne circonférentielle radiale (2) définissant un périmètre extérieur de la roulette, la ligne circonférentielle étant située dans un plan principal (3) de la roulette et formant, au moins partiellement, une arête coupante (5) qui comporte des dents coupantes (7) écartées les unes de les autres dans la direction circonférentielle par des entredents (8) et dont l'hauteur et/ou l'étendue circonférentielle dépasse une rugosité de la surface irrégulière possible, et au moins une part des ou toutes les entredents (8) comportant une arête coupante (9),
la roulette **caractérisée en ce que**
les arêtes coupantes des entredents et les arêtes coupantes des dents sont situées dans le même plan principal de la roulette ou que toutes les arêtes coupantes des dents et des entredents sont situées à une distance latérale de ≤ 5 µm du plan principal incluant la ligne circonférentielle de la roulette, et que
(i) les faces supérieures de la dent et/ou les faces latérales de la dent et/ou les entredents présentent un craquellement avec une rugosité de la surface Rz selon la norme DIN/ISO 4287 de 0,5 à 5 µm et/ou une rugosité Ra selon la norme DIN/ISO 4287 de 0,05 à 0,5 µm, et/ou que
(ii) les faces supérieures de la dent présentent une denture fine régulière avec une hauteur de structure de ≤ 1/4 de l'hauteur de la dent, et/ou que
(iii) la roulette consiste en un matériau de métal dur et est muni d'un revêtement avec des propriétés réduisant l'usure, et/ou que
(iv) les faces latérales inclinées (6) de la roulette convergent sur une crête et que les dents coupantes (7) sont mises à la crête et/ou que les dents coupantes sont arrangées dans une rainure de la surface circonférentielle de la roulette, et/ou que
(v) l'étendue longitudinale des entredents sont dans la gamme de 2-300 µm, exception faite des valeurs de 19 µm, 28 µm, 32 µm, 34 µm et 40 µm.

2. Roulette selon la revendication 1, **caractérisée en ce que** les entredents (8) sont formées par des cavités au moins dans l'une ou dans les deux faces latérales (6) de la roulette.

3. Roulette selon les revendications 1 ou 2, **caractérisée en ce qu'**au moins quelques arêtes coupantes (9) des entredents (8) présentent des zones ascendantes vers le dos de la dent (7c) voisin respectif.

4. Roulette selon l'une des revendications 1 à 3, **caractérisée en ce que** l'angle d'engrenage inclus (W2) des entredents (8) est égal à l'angle d'engrenage (W1) des dents (7), au moins essentiellement.

5. Roulette selon l'une des revendications 1 à 4, **caractérisée en ce que** les flancs des entredents (8) sont construits d'une manière plane, au moins essentiellement.

6. Roulette selon l'une des revendications 1 à 5, **caractérisée en ce que** (i) les arêtes coupantes (9) des entredents (8) sont radialement décalées vers l'arrière par rapport aux arêtes coupantes des dents (7) de l'environ 0,5 µm à 25 µm, et/ou (ii) que les dents coupantes (7) ou les entredents (8) ou les dents coupantes et les entredents (7, 8) respectivement présentent une étendue longitudinale dans la direction circonférentielle de l'environ 5 µm à 200 µm.

7. Roulette selon l'une des revendications 1 à 6, **caractérisée en ce que** les entredents (8) montent en hauteur de sa base vers le dos de la dent via une zone de transition, et que la zone de transition est construite comme une arête coupante (38), au moins en partie.

8. Roulette selon l'une des revendications 1 à 7, **caractérisée en ce que** l'étendue circonférentielle des dents (7) est inférieure ou égale à l'étendue circonférentielle des entredents (8).

9. Roulette selon l'une des revendications 1 à 8, **caractérisée en ce que** la roulette consiste en un diamant polycristallin (PCD) ou en un matériau de métal dur.

10. Machine de coupage avec une table destinée à supporter un corps de verre à graver et avec une tête de coupe destinée à recevoir une roulette de coupe, la tête de coupe pouvant être transférée vers une position de repos écartée de la plaque de verre, et vers une position de travail dans laquelle la roulette s'applique contre le corps de verre à une force de pression, des moyens pour la réglage de la force de pression de la roulette de coupe par rapport à la plaque de verre étant prévus, et la tête de coupe pour graver le corps de verre, avec la roulette de coupe y appliquée, pouvant être guidée le long une ligne ,
une roulette de coupe (53) étant arrangée sur la tête de coupe (56), roulette qui présente une ligne circonférentielle radiale définissant un périmètre extérieur de la roulette, ladite ligne circonférentielle radiale se situant dans un plan principal (3) de la roulette et formant une arête coupante (5), au moins en partie, l'arête coupante comportant des dents coupantes (7) écartées les unes de les autres par des entredents (8) et dont l'hauteur et/ou l'étendue circonférentielle dépasse une rugosité de la surface irrégulière possible, et au moins une part des ou toutes les entredents (8) comportant une arête coupante (9),
**caractérisée en ce que** sur la tête de coupe est arrangée une roulette de coupe dont les arêtes coupantes des entredents et les arêtes coupantes des dents sont situées dans le même plan principal de la roulette ou que toutes les arêtes coupantes des dents et des entredents sont situées à une distance latérale de ≤ 5 µm du plan central principal incluant la ligne circonférentielle de la roulette.

11. Machine de coupage selon la revendication 10, avec une roulette de coupe selon l'une des revendications 1 à 9.

12. Coupe-verre manuel, avec une manette destinée à guider le coupe-verre à la main, et avec un logement d'une roulette de coupe-verre, une roulette de coupe (1) étant arrangée sur le logement, ladite roulette présentant une ligne circonférentielle radiale définissant un périmètre extérieur de la roulette et se situant dans un plan principal (3) de la roulette et formant une arête coupante (5), au moins en partie, l'arête coupante comprenant des dents coupantes (7) écartées les unes de les autres dans la direction circonférentielle par des entredents (8) et dont l'hauteur et/ou l'étendue circonférentielle dépasse une rugosité de la surface irrégulière possible, et au moins une part des ou toutes les entredents (8) comportant une arête coupante (9), **caractérisé en ce que** sur la tête de coupe est construite une roulette de coupe de sorte que les arêtes coupantes des entredents et les arêtes coupantes des dents sont situées dans le même plan principal de la roulette ou que toutes les arêtes coupantes des dents et des entredents sont situées à une distance latérale de ≤ 5 µm du plan central principal incluant la ligne circonférentielle de la roulette.

13. Coupe-verre manuel selon la revendication 12, avec une roulette de coupe selon l'une des revendications 1 à 9.

14. Procédé de fabrication des corps de verre par l'entaillage d'un corps de verre prédéterminé en utilisant une roulette de coupe-verre et par la séparation en corps individuels plus petits du corps de verre le long une ligne de rayure en utilisant une roulette de coupe-verre, ladite ligne de rayure présentant une ligne circonférentielle radiale (2) définissant un périmètre extérieur de la même, la ligne circonférentielle radiale (2) se situant dans un plan principal (3) de la roulette et formant une arête coupante (5), au moins en partie, l'arête coupante présentant des dents coupantes (7) écartées les unes de les autres dans la direction circonférentielle par des entredents (8) et dont l'hauteur et/ou l'étendue circonférentielle dépasse une rugosité de la surface irrégulière possible, et au moins une part des ou toutes les entredents (8) comportant une arête coupante (9), **caractérisé en ce qu'**on utilise une roulette de coupe dont les arêtes coupantes des entredents et les arêtes coupantes des dents sont situées dans le même plan principal de la roulette ou que toutes les arêtes coupantes des dents et des entredents sont situées à une distance latérale de ≤ 5 µm du plan central principal incluant la ligne circonférentielle de la roulette, et que
(i) on utilise un corps de verre qui présente (a) une surface coudée et/ou qui consiste (b) en verre trempé, en verre à surface modifiée, en verre cautérisé ou en verre à surface revêtu ou en verre à surface munie d'un film plastique, ou
(ii) le corps de verre est une plaque de verre pour la fabrication des écrans plats de dispositifs électroniques, ou
(iii) on produit une ligne de découpage fermée comme une ligne de rayure, ou
(iv) on fait la rayure dans une coupe ouverte lors de laquelle est déjà obtenue une certaine séparation des parties séparées du corps par le processus de rayure.

15. Procédé selon la revendication 14, **caractérisé en ce qu'**on utilise une roulette de coupe selon l'une des revendications 1 à 9.
